# EUROPEAN PATENT SPECIFICATION

(11) **EP 4 320 754 B1**
(45) Date of publication and mention of the grant of the patent: **16.07.2025**
(21) Application number: 22716994.3
(22) Date of filing: 05.04.2022
(51) Int. Cl.: H04B 10/114, H04B 10/116

(54) **OPTICAL WIRELESS COMMUNICATION SYSTEM NETWORK SEPARATION**
TRENNUNG EINES OPTISCHEN DRAHTLOSEN KOMMUNIKATIONSSYSTEMS
SÉPARATION DE RÉSEAUX DE SYSTÈME DE COMMUNICATION OPTIQUE SANS FIL

(30) Priority: 06.04.2021 GB 202104887
(43) Date of publication of application: 14.02.2024
(73) Proprietor: PureLiFi Limited, Edinburgh EH6 6QH (GB)
(72) Inventor: AFGANI, Mostafa, Edinburgh EH6 6QH (GB); BERNER, Stephan, Edinburgh EH6 6QH (GB)
(74) Representative: Marks & Clerk LLP
(86) International application number: PCT/GB2022/050852
(87) International publication number: WO 2022/214801

(56) References cited:
- WO-A1-2021/018645
- US-B1- 10 778 330
- US-B1- 7 330 661

## Description

### FIELD

The present disclosure relates to the separation or isolation of optical wireless communication (OWC) networks.

### BACKGROUND

It is known to provide wireless data communications by using light instead of radio frequencies to transmit and receive data wirelessly between devices. Data may be transmitted using light by modulating an intensity of the light. The light used may be coherent or incoherent. Methods that use light to transmit data wirelessly may be referred to as optical wireless communications or light communications (LC).

OWC, or LC, can offer advantages over conventional RF wireless communication such as Wi-Fi^{™}, due to characteristics of the optical channel. Optical signals usually do not penetrate, for example, walls, unlike RF signals, which can provide for increased security. Furthermore, the optical transmissions can be particularly directional in nature.

OWC networks using visible light may in some circumstances allow a higher data capacity and greater energy efficiency than radio frequency wireless networks, and may also be used to replace point-to-point infrastructure in locations where conventional infrastructure does not exist or is too expensive to build.

A typical OWC network may comprise an Access Point (AP) and one or more Stations (STAs). In one such OWC network, the AP may communicate with each STA via a downlink from the AP to the STA and an uplink from the STA to the AP. Full-duplex communication is achieved by the uplink and downlink wireless communication being performed at different optical wavelengths or different ranges of optical wavelengths. For example, the AP may be incorporated into a luminaire and may use the visible light of the luminaire for the downlink. The STA may be incorporated into a mobile electronic device, for example a smartphone, and may use infrared (IR) light for the uplink. To optimise signal to noise ratio (SNR) at a receiver in either the AP or the STA, an optical filter may be used in conjunction with one or more photodetectors to optically separate light at a desired wavelength from light in the rest of the received spectrum. Light outside of the chosen wavelength or range of wavelengths may contribute to noise if not filtered out.

Security sensitive organizations may want to have different physical networks for different classification levels, for example one network to access classified information, another network for general use and one network for visitors. Unlike virtual networks, a different physical network cannot be compromised without physical access. Using wired technology, for example ethernet, this can be accomplished easily by duplicating the network infrastructure several times. For wireless communication systems like OWC systems, however, the task of separating several networks physically is more challenging.

US 7 330 661 B1 discloses a method and apparatus for processing a data signal for transmission to a remote device in which at least two synchronized copies of the data signal are transmitted, in optical form, in different directions. To that end, the data signal first is synchronized to a clock signal to produce a composite signal. The composite signal then is converted to an optical signal, which is referred to as an "outgoing signal." A plurality of copies of the outgoing signal then are transmitted. At least two copies of the outgoing signal are transmitted in different directions.

### SUMMARY

According to an aspect of the present invention there is provided an optical wireless communication system according to claim 1.

Further features of the optical wireless communication system are defined according to the dependent claims.

According to an aspect of the present invention there is provided an optical wireless communication method according to claim 15.

### Using Different Optical Wavelengths and Different Identifier Codes for Different OWC Networks

### OWC System

According to an aspect of the present disclosure there is provided an OWC system, comprising:
an OWC network and a further OWC network,
the OWC network comprising:
   a primary OWC apparatus configured for connection to an electronic network; and
   one or more secondary OWC apparatuses, each secondary OWC apparatus configured for incorporation into, or connection to, a corresponding user device, and
the further OWC network comprising:
   a further primary OWC apparatus configured for connection to a further electronic network; and
   one or more further secondary OWC apparatuses, each further secondary OWC apparatus configured for incorporation into, or connection to, a corresponding user device,
wherein the primary OWC apparatus and each of the one or more secondary OWC apparatuses are configured for communication of one or more OWC signals therebetween on one or more optical wavelengths, each OWC signal comprising corresponding data and a corresponding identifier code,
wherein the further primary OWC apparatus and each of the one or more further secondary OWC apparatuses are configured for communication of one or more further OWC signals therebetween on one or more further optical wavelengths, each further OWC signal comprising corresponding further data and a corresponding further identifier code,
wherein at least one of the one or more further optical wavelengths is different to at least one of the one or more optical wavelengths and wherein at least one of the one or more further identifier codes is different to at least one of the one or more identifier codes.

The primary and the one or more secondary OWC apparatuses may be configured to exchange the optical wireless communication signals according to an optical wireless communication protocol. Similarly, the further primary and the one or more further secondary OWC apparatuses may be configured to exchange the optical wireless communication signals according to an optical wireless communication protocol.

The use of different identifier codes by the OWC network and the further OWC network in addition to the use of different optical wavelengths by the OWC network and the further OWC network may improve the isolation between the OWC network and the further OWC network. This may be important for security of communications, for example where the isolation provided solely by the use of different optical wavelengths by the OWC network and the further OWC network is not sufficient to provide a required degree of isolation between the OWC network and the further OWC network.

The identifier code may be an arbitrarily generated code. The identifier code may for example be contained in the header of a signal message, for example the IEEE 802.11 supported short sequence and long sequence as well as PN sequences. The PN sequence may be, for example, a Kasami sequence, Gold sequence, Golay sequence, m-sequence, or may be the result of an extensive search with the goal of optimizing the autocorrelation and cross-correlation functions under certain constraints.

The electronic network and the further electronic network may be different electronic networks or may be part of the same electronic network.

### OWC System: Downlink

Optionally:
wherein the primary OWC apparatus is configured to receive first data from the electronic network, to generate a first OWC signal including the first data and a first identifier code, and to transmit the first OWC signal to each of the one or more secondary OWC apparatuses on a first optical wavelength,
wherein each secondary OWC apparatus is configured to detect the first OWC signal on the first optical wavelength, to extract the first identifier code from the detected first OWC signal and, based at least in part on whether the extracted first identifier code matches an identifier code stored in, or available to, the secondary OWC apparatus, to extract the first data from the detected first OWC signal and output the extracted first data to the corresponding user device,
wherein the further primary OWC apparatus is configured to receive third data from the further electronic network, to generate a third OWC signal including the third data and a third identifier code, and to transmit the third OWC signal to each of the one or more further secondary OWC apparatuses on a third optical wavelength,
wherein each further secondary OWC apparatus is configured to detect the third OWC signal on the third optical wavelength, to extract the third identifier code from the detected third OWC signal and, based at least in part on whether the extracted third identifier code matches an identifier code stored in, or available to, the further secondary OWC apparatus, to extract the third data from the detected third OWC signal and output the extracted third data to the corresponding user device,
wherein the first and third optical wavelengths are different, and
wherein the first and third identifier codes are different.

### OWC System: Uplink

Optionally:
wherein each secondary OWC apparatus is configured to receive second data from the corresponding user device, to generate a second OWC signal including the second data and a second identifier code, and to transmit the second OWC signal to the primary OWC apparatus on a second optical wavelength,
wherein the primary OWC apparatus is configured to detect the second OWC signal on the second optical wavelength, to extract the second identifier code from the detected second OWC signal and, based at least in part on whether the extracted second identifier code matches an identifier code stored in, or available to, the primary OWC apparatus, to extract the second data from the detected second OWC signal and output the extracted second data to the electronic network,
wherein each further secondary OWC apparatus is configured to receive fourth data from the corresponding user device, to generate a fourth OWC signal including the fourth data and a fourth identifier code, and to transmit the fourth OWC signal to the further primary OWC apparatus on a fourth optical wavelength,
wherein the further primary OWC apparatus is configured to detect the fourth OWC signal on the fourth optical wavelength, to extract the fourth identifier code from the detected fourth OWC signal and, based at least in part on whether the extracted fourth identifier code matches an identifier code stored in, or available to, the further primary OWC apparatus, to extract the fourth data from the detected fourth OWC signal and output the extracted fourth data to the further electronic network,
wherein the second and fourth optical wavelengths are different, and
wherein the second and fourth identifier codes are different.

### OWC System: Downlink and Uplink

Optionally:
wherein the primary OWC apparatus is configured to receive first data from the electronic network, to generate a first OWC signal including the first data and a first identifier code, and to transmit the first OWC signal to each of the one or more secondary OWC apparatuses on a first optical wavelength,
wherein each secondary OWC apparatus is configured to detect the first OWC signal on the first optical wavelength, to extract the first identifier code from the detected first OWC signal and, based at least in part on whether the extracted first identifier code matches an identifier code stored in, or available to, the secondary OWC apparatus, to extract the first data from the detected first OWC signal and output the extracted first data to the corresponding user device,
wherein the further primary OWC apparatus is configured to receive third data from the further electronic network, to generate a third OWC signal including the third data and a third identifier code, and to transmit the third OWC signal to each of the one or more further secondary OWC apparatuses on a third optical wavelength,
wherein each further secondary OWC apparatus is configured to detect the third OWC signal on the third optical wavelength, to extract the third identifier code from the detected third OWC signal and, based at least in part on whether the extracted third identifier code matches an identifier code stored in, or available to, the further secondary OWC apparatus, to extract the third data from the detected third OWC signal and output the extracted third data to the corresponding user device,
wherein each secondary OWC apparatus is configured to receive second data from the corresponding user device, to generate a second OWC signal including the second data and a second identifier code, and to transmit the second OWC signal to the primary OWC apparatus on a second optical wavelength,
wherein the primary OWC apparatus is configured to detect the second OWC signal on the second optical wavelength, to extract the second identifier code from the detected second OWC signal and, based at least in part on whether the extracted second identifier code matches an identifier code stored in, or available to, the primary OWC apparatus, to extract the second data from the detected second OWC signal and output the extracted second data to the electronic network,
wherein each further secondary OWC apparatus is configured to receive fourth data from the corresponding user device, to generate a fourth OWC signal including the fourth data and a fourth identifier code, and to transmit the fourth OWC signal to the further primary OWC apparatus on a fourth optical wavelength,
wherein the further primary OWC apparatus is configured to detect the fourth OWC signal on the fourth optical wavelength, to extract the fourth identifier code from the detected fourth OWC signal and, based at least in part on whether the extracted fourth identifier code matches an identifier code stored in, or available to, the further primary OWC apparatus, to extract the fourth data from the detected fourth OWC signal and output the extracted fourth data to the further electronic network,
wherein at least one of:
   the first optical wavelength is different to the third optical wavelength; or
   the second optical wavelength is different to the fourth optical wavelength, and
wherein at least one of:
   the first identifier code is different to one or both of the third and fourth identifier codes; or
   the second identifier code is different to one or both of the third and fourth identifier codes.

Optionally, wherein the first and second optical wavelengths are the same and the primary OWC apparatus and each of the secondary OWC apparatuses are configured for half-duplex communication therebetween or wherein the first and second optical wavelengths are different and the primary OWC apparatus and each of the secondary OWC apparatuses are configured for half-duplex or full-duplex communication therebetween.

Optionally, wherein the first and second identifier codes are the same.

### OWC System: Using Different Optical Wavelengths, Different Identifier Codes and Different Reference Frequencies for Different OWC Networks

Optionally:
wherein the primary OWC apparatus and each of the secondary OWC apparatuses are configured to generate corresponding reference frequencies which are within a predetermined reference frequency range and use the corresponding reference frequencies to generate each of the one or more OWC signals and/or to extract the corresponding data and the corresponding identifier codes from each of the one or more OWC signals,
wherein the further primary OWC apparatus and each of the further secondary OWC apparatuses are configured to generate corresponding further reference frequencies which are within a further predetermined reference frequency range and use the corresponding further reference frequencies to generate each of the one or more further OWC signals and/or to extract the corresponding further data and the corresponding further identifier codes from each of the one or more further OWC signals,
wherein the predetermined reference frequency range and the further predetermined reference frequency range are non-overlapping.

The use of different reference frequencies by the OWC network and the further OWC network in addition to the use of different optical wavelengths and the use of different identifier codes by the OWC network and the further OWC network may further improve the isolation between the OWC network and the further OWC network. This may be important for security of communications, for example where the isolation provided by the use of different optical wavelengths by the OWC network and the further OWC network and the use of different identifier codes by the OWC network and the further OWC network is not sufficient to provide a required degree of isolation between the OWC network and the further OWC network.

### OWC System: Downlink

Optionally,
wherein the primary OWC apparatus is configured to generate a first reference frequency within a predetermined reference frequency range and to use the first reference frequency to generate the first OWC signal,
wherein each secondary OWC apparatus is configured to generate a second reference frequency within the predetermined reference frequency range and to use the second reference frequency to extract the first data and the first identifier code from the detected first OWC signal,
wherein the further primary OWC apparatus is configured to generate a third reference frequency within a further predetermined reference frequency range and to use the third reference frequency to generate the third OWC signal,
wherein each further secondary OWC apparatus is configured to generate a fourth reference frequency within the further predetermined reference frequency range and to use the fourth reference frequency to extract the third data and the third identifier code from the detected third OWC signal, and
wherein the predetermined reference frequency range and the further predetermined reference frequency range are non-overlapping.

### OWC System: Uplink

Optionally,
wherein each secondary OWC apparatus is configured to generate a second reference frequency within a predetermined reference frequency range and to use the second reference frequency to generate the corresponding second OWC signal,
wherein the primary OWC apparatus is configured to generate a first reference frequency within the predetermined reference frequency range and to use the first reference frequency to extract the second data and the second identifier code from the detected second OWC signal,
wherein each further secondary OWC apparatus is configured to generate a fourth reference frequency within a further predetermined reference frequency range and to use the fourth reference frequency to generate the corresponding fourth OWC signal,
wherein the further primary OWC apparatus is configured to generate a third reference frequency within the further predetermined reference frequency range and to use the third reference frequency to extract the fourth data and the fourth identifier code from the detected fourth OWC signal, and
wherein the predetermined reference frequency range and the further predetermined reference frequency range are non-overlapping.

### OWC System: Uplink and Downlink

Optionally,
wherein the primary OWC apparatus is configured to generate a first reference frequency within a predetermined reference frequency range and to use the first reference frequency to generate the first OWC signal and to extract the second data and the second identifier code from the detected second OWC signal,
wherein each secondary OWC apparatus is configured to generate a second reference frequency within the predetermined reference frequency range and to use the second reference frequency to extract the first data and the first identifier code from the detected first OWC signal and to generate the corresponding second OWC signal,
wherein the further primary OWC apparatus is configured to generate a third reference frequency within a further predetermined reference frequency range and to use the third reference frequency to generate the third OWC signal and to extract the fourth data and the fourth identifier code from the detected fourth OWC signal,
wherein each further secondary OWC apparatus is configured to generate a fourth reference frequency within the further predetermined reference frequency range and to use the fourth reference frequency to extract the third data and the third identifier code from the detected third OWC signal and to generate the corresponding fourth OWC signal, and
wherein the predetermined reference frequency range and the further predetermined reference frequency range are non-overlapping.

### OWC Network: Downlink

Optionally, wherein:
the primary OWC apparatus comprises:
   electronic circuitry; and
   an OWC transmitter device, and
each secondary OWC apparatus comprises:
   an OWC receiver device; and
   electronic circuitry storing an identifier code,
wherein the electronic circuitry of the primary OWC apparatus is configured to receive the first data from the electronic network, generate the first OWC signal which includes the first data and the first identifier code, and cause the OWC transmitter device of the primary OWC apparatus to transmit the first OWC signal on the first optical wavelength to the OWC receiver device of each secondary OWC apparatus, and
wherein the OWC receiver device of each secondary OWC apparatus has a spectral range which includes the first wavelength so that the OWC receiver device of each secondary OWC apparatus detects the first OWC signal, and
wherein the electronic circuitry of each secondary OWC apparatus is configured to extract the first identifier code from the detected first OWC signal and, based at least in part on whether the extracted first identifier code matches the identifier code stored in, or available to, the electronic circuitry of the secondary OWC apparatus, to extract the first data from the detected first OWC signal and output the extracted first data to the corresponding user device.

The primary OWC apparatus and each of the one or more secondary OWC apparatuses may be configured to exchange the optical communication signals according to an optical wireless communication protocol.

Such an OWC network may provide a downlink from the primary OWC to each secondary OWC apparatus which relies upon the transmission of the first OWC signal on the first optical wavelength, the first OWC signal including the first data and the first identifier code. Each secondary OWC apparatus may be associated with the primary OWC apparatus in the same OWC network in the sense that: (i) the spectral range of the OWC receiver device of each secondary OWC apparatus includes the first optical wavelength; and (ii) the identifier code which is stored in, or available to, the electronic circuitry of each secondary OWC apparatus matches the first identifier code. Such an OWC network may at least reduce the probability that any of the one or more secondary OWC apparatuses outputs further data extracted from a further OWC signal which is carried by light received from a further OWC apparatus belonging to a further OWC network, wherein the light received from the further OWC apparatus includes a further optical wavelength which is different to the first optical wavelength and the further signal includes a further identifier code which is different to the first identifier code.

Such an OWC network may prevent any of the one or more secondary OWC apparatuses from outputting further data extracted from a detected further OWC signal, wherein the further OWC signal is carried by light received from a further OWC apparatus belonging to a further OWC network, and wherein the light received from the further OWC apparatus includes a further optical wavelength which is different to the first optical wavelength and the further OWC signal includes a further identifier code which is different to the first identifier code.

As such, the OWC network is configured to separate or isolate the OWC network from the further OWC network. For example, the OWC network may be configured to prevent or reduce cross-talk between the OWC network and the further OWC network.

Optionally, wherein the OWC receiver device of each secondary OWC apparatus comprises a photodetector and a first optical filter such as a first optical interference filter, wherein the first optical filter defines, at least in part, the spectral range of the OWC receiver device of the secondary OWC apparatus.

For a given level of cross-talk between the OWC network and the further OWC network, the inclusion of the first identifier code with the first OWC signal may enable the use of one or more secondary OWC apparatuses which each comprise an OWC receiver device having a broader spectral range. For example, the inclusion of the first identifier code with the first OWC signal may enable the use of one or more secondary OWC apparatuses which each comprise an OWC receiver device which includes a filter such as an interference filter having a broader spectral passband. This may be advantageous because filters such as interference filters having broader spectral passbands are easier and more cost-effective to manufacture than filters such as interference filters having narrower spectral passbands. Additionally a broader spectral filter can provide a higher power density at the receiver enabling the use of lower cost transmitters and receivers.

Optionally, wherein the electronic circuitry of each secondary OWC apparatus stores a threshold correlation value and the electronic circuitry of each secondary OWC apparatus is configured to correlate the extracted first identifier code with the stored identifier code so as to generate a correlation value and to determine whether the extracted first identifier code matches the stored identifier code according to whether the determined correlation value is greater than the stored threshold correlation value or according to other known comparison methods.

Optionally, wherein the first OWC signal comprises one or more packets, the first data is carried by the one or more packets, and each packet comprises a header, wherein the header includes the first identifier code.

Optionally, the optical wavelength of light transmitted by the apparatus of a network is visible light or infra-red light or ultra-violet light or any wavelength of light suitable for OWC communication..

Optionally, the electronic circuitry of each secondary OWC apparatus is configured to extract the first identifier code from the detected first OWC signal by converting the first OWC signal into a series of digital values and identifying the first identifier code from the series of digital values.

Optionally, the electronic circuitry of each secondary OWC apparatus is configured to extract the first data from the detected first OWC signal by identifying the first data from the series of digital values.

Optionally, the first OWC signal comprises a baseband signal that occupies a frequency band from 0 Hz (or close to 0 Hz) to some arbitrary cut-off frequency. This is in contrast with intermediate frequency (IF) or RF signals that are modulated on a carrier frequency.

Optionally, the first OWC signal comprises a modulated signal such as an OFDM signal or a QAM signal.

Optionally, the electronic circuitry of the primary OWC apparatus comprises a modulator, for example a modem, for generating the first OWC signal.

Optionally, the electronic circuitry of each secondary OWC apparatus comprises a demodulator, for example a modem, for demodulating the detected first OWC signal so as to form a demodulated first signal.

Optionally, the electronic circuitry of each secondary OWC apparatus is configured to convert the demodulated first OWC signal into a series of digital values and to identify the first identifier code from the series of digital values.

Optionally, the electronic circuitry of each secondary OWC apparatus is configured to extract the first data from the demodulated first OWC signal by identifying the first data from the series of digital values.

### OWC Network: Uplink

Optionally, wherein:
the primary OWC apparatus comprises:
   electronic circuitry; and
   an OWC receiver device storing an identifier code, and
each secondary OWC apparatus comprises:
   an OWC transmitter device; and
   electronic circuitry,
wherein the electronic circuitry of each secondary OWC apparatus is configured to receive corresponding second data from the corresponding user device, to generate the corresponding second OWC signal which includes the corresponding second data and the second identifier code, and to cause the OWC transmitter device to transmit the corresponding second OWC signal on the second optical wavelength to the OWC receiver device of the primary OWC apparatus, and
wherein the OWC receiver device of the primary OWC apparatus has a spectral range which includes the second wavelength so that the OWC receiver device of the primary OWC apparatus detects the second OWC signal, and
wherein, for each secondary OWC apparatus, the electronic circuitry of the primary OWC apparatus is configured to extract the second identifier code from the detected second OWC signal and, based at least in part on whether the extracted second identifier code matches an identifier code stored in, or available to, the electronic circuitry of the primary OWC apparatus, to extract the second data from the detected second OWC signal and output the extracted second data from the primary OWC apparatus to the electronic network.

Optionally, wherein the OWC receiver device of the primary OWC apparatus comprises a photodetector and a second optical filter such as a second optical interference filter, wherein the second optical filter defines, at least in part, the spectral range of the OWC receiver device of the primary OWC apparatus.

For a given level of cross-talk between the OWC network and the further OWC network, the inclusion of the second identifier code with each second OWC signal may enable the use of a primary OWC apparatus which comprises an OWC receiver device having a broader spectral range. For example, the inclusion of the second identifier code with each second OWC signal may enable the use of a primary OWC apparatus which comprises an OWC receiver device which includes a filter such as an interference filter having a broader spectral passband. This may be advantageous because filters such as interference filters having broader spectral passbands are easier and more cost-effective to manufacture than filters such as interference filters having narrower spectral passbands. Additionally a broader spectral filter can provide a higher power density at the receiver enabling the use of lower cost transmitters and receivers.

Optionally, wherein the electronic circuitry of the primary OWC apparatus stores a threshold correlation value and the electronic circuitry of the primary OWC apparatus is configured to correlate the extracted second identifier code with the stored identifier code so as to generate a correlation value and to determine whether the extracted second identifier code matches the stored identifier code according to whether the determined correlation value is greater than the stored threshold correlation value or according to other known comparison methods.

Optionally, wherein the second OWC signal comprises one or more packets, the second data is carried by the one or more packets, and each packet comprises a header, wherein the header includes the second identifier code.

Optionally, the second optical wavelength is in the visible or IR region of the electromagnetic spectrum.

Optionally, the electronic circuitry of the primary OWC apparatus is configured to extract the second identifier code from each detected second OWC signal by converting each second OWC signal into a series of digital values and identifying the second identifier code from the series of digital values.

Optionally, the electronic circuitry of the primary OWC apparatus is configured to extract the second data from each detected second OWC signal by identifying the second data from the series of digital values.

Optionally, the second OWC signal comprises a baseband signal that occupies a frequency band from 0 Hz (or close to 0 Hz) to some arbitrary cut-off frequency. This is in contrast with intermediate frequency (IF) or RF signals that are modulated on a carrier frequency.

Optionally, each second OWC signal comprises a modulated signal such as an OFDM signal or a QAM signal.

Optionally, the electronic circuitry of each secondary OWC apparatus comprises a modulator, for example a modem, for generating the corresponding second OWC signal.

Optionally, the electronic circuitry of the primary OWC apparatus comprises a demodulator, for example a modem, for demodulating each detected second OWC signal so as to form a corresponding demodulated second signal.

Optionally, the electronic circuitry of the primary OWC apparatus is configured to convert each demodulated second OWC signal into a series of digital values and to identify the second identifier code from the series of digital values.

Optionally, the electronic circuitry of the primary OWC apparatus is configured to extract the second data from the demodulated second OWC signal by identifying the second data from the series of digital values.

Optionally, the first optical wavelength is in the visible region of the electromagnetic spectrum and the second optical wavelength is in the IR region of the electromagnetic spectrum.

### OWC Network: Using Different Wavelengths, Different Identifier Codes and Different Reference Frequencies for Different Networks

Optionally, wherein:
the primary OWC apparatus comprises electronic circuitry which generates the first reference frequency; and
each second OWC apparatus comprises electronic circuitry which generates the corresponding second reference frequency.

Optionally, wherein the first and second reference frequencies are sufficiently similar, for example because the predetermined reference frequency range is sufficiently small, that the first and/or second data may be communicated between the primary OWC apparatus and each secondary OWC apparatus using a communication protocol such as IEEE 802.11.

Optionally, the electronic circuitry of the primary OWC apparatus and the electronic circuitry of each secondary OWC apparatus are designed so that the first and second reference frequencies are nominally equal.

Optionally, the first and second reference frequencies differ by less than a predetermined reference clock frequency difference.

Optionally the first and second reference frequency are similar to within a nominal frequency tolerance or frequency error. If the frequency difference is too large the packet decoding is unable to be completed successfully due to errors and the packet is rejected. Error checking may be implemented for example, by an error routine of the communication protocol.

### OWC Network: Common

Optionally, the electronic circuitry of the primary OWC apparatus includes a processing resource such as an application processor. For example, the primary OWC apparatus may include a modulator, a demodulator or a modem, wherein the modulator, the demodulator or the modem includes a processing resource.

Optionally, the electronic circuitry of the primary OWC apparatus includes a memory. For example, the primary OWC apparatus may include a modulator, a demodulator or a modem, wherein the modulator, the demodulator or the modem includes a memory.

Optionally, the electronic circuitry of each secondary OWC apparatus includes a processing resource. For example, each secondary OWC apparatus may include a modulator, a demodulator or a modem, wherein the modulator, the demodulator or the modem includes a processing resource.

Optionally, the electronic circuitry of each secondary OWC apparatus includes a memory. For example, each secondary OWC apparatus may include a modulator, a demodulator or a modem, wherein the modulator, the demodulator or the modem includes a memory.

Optionally, the primary OWC apparatus comprises or forms part of an access point and each of the one or more secondary OWC apparatuses comprises or forms part of a station.

Optionally, the primary OWC apparatus comprises or forms part of a luminaire and optionally the downlink from the primary apparatus may be a source of illumination

Optionally, the electronic circuitry of each secondary OWC apparatus stores or defines a cryptographic key in hardware and wherein the electronic circuitry of each secondary OWC apparatus is configured to prevent firmware, including an identifier code, from being stored in the electronic circuitry of each secondary OWC apparatus unless that firmware, including an identifier code, can be authenticated and/or decrypted by the stored or defined cryptographic key.

Optionally, the electronic circuitry of the primary OWC apparatus stores or defines a cryptographic key in hardware and wherein the electronic circuitry of the primary OWC apparatus is configured to prevent firmware, including an identifier code, from being stored in the electronic circuitry of the primary OWC apparatus unless that firmware, including an identifier code, can be authenticated and/or decrypted by the stored or defined cryptographic key.

### OWC Method

According to an aspect of the present disclosure there is provided an OWC method, comprising:
communicating one or more OWC signals between a primary OWC apparatus of an OWC network and one or more secondary OWC apparatuses of the OWC network on one or more optical wavelengths, each OWC signal comprising corresponding data and a corresponding identifier code, the primary OWC apparatus configured for connection to an electronic network, and each secondary OWC apparatus configured for incorporation into, or connection to, or comprising, a corresponding user device; and
communicating one or more further OWC signals between a further primary OWC apparatus of a further OWC network and one or more further secondary OWC apparatuses of the further OWC network on one or more further optical wavelengths, each further OWC signal comprising corresponding further data and a corresponding further identifier code, the further primary OWC apparatus configured for connection to a further electronic network, and each further secondary OWC apparatus configured for incorporation into, or connection to, or comprising, a corresponding further user device,
wherein at least one of the one or more further optical wavelengths is different to at least one of the one or more optical wavelengths and at least one of the one or more further identifier codes is different to at least one of the one or more identifier codes.

### OWC Method: Downlink

Optionally,
wherein the primary OWC apparatus receives first data from the electronic network, generates a first OWC signal including the first data and a first identifier code, and transmits the first OWC signal to each of the one or more secondary OWC apparatuses on a first optical wavelength,
wherein each secondary OWC apparatus detects the first OWC signal on the first optical wavelength, extracts the first identifier code from the detected first OWC signal and, based at least in part on whether the extracted first identifier code matches an identifier code stored or available to in the secondary OWC apparatus, extracts the first data from the detected first OWC signal and outputs the extracted first data to the corresponding user device,
wherein the further primary OWC apparatus receives third data from the further electronic network, generates a third OWC signal including the third data and a third identifier code, and transmits the third OWC signal to each of the one or more further secondary OWC apparatuses on a third optical wavelength,
wherein each further secondary OWC apparatus detects the third OWC signal on the third optical wavelength, extracts the third identifier code from the detected third OWC signal and, based at least in part on whether the extracted third identifier code matches an identifier code stored in, or available to, the further secondary OWC apparatus, extracts the third data from the detected third OWC signal and outputs the extracted third data to the corresponding user device,
wherein the first and third optical wavelengths are different, and
wherein the first and third identifier codes are different.

### OWC Method: Uplink

Optionally,
wherein each secondary OWC apparatus receives second data from the corresponding user device, generates a second OWC signal including the second data and a second identifier code, and transmits the second OWC signal to the primary OWC apparatus on a second optical wavelength,
wherein the primary OWC apparatus detects the second OWC signal on the second optical wavelength, extracts the second identifier code from the detected second OWC signal and, based at least in part on whether the extracted second identifier code matches an identifier code stored in, or available to, the primary OWC apparatus, extracts the second data from the detected second OWC signal and outputs the extracted second data to the electronic network,
wherein each further secondary OWC apparatus receives fourth data from the corresponding user device, generates fourth OWC signal including the fourth data and a fourth identifier code, and transmits the fourth OWC signal to the further primary OWC apparatus on a fourth optical wavelength,
wherein the further primary OWC apparatus detects the fourth OWC signal on the fourth optical wavelength, extracts the fourth identifier code from the detected fourth OWC signal and, based at least in part on whether the extracted fourth identifier code matches an identifier code stored in, or available to, the further primary OWC apparatus, extracts the fourth data from the detected fourth OWC signal and outputs the extracted fourth data to the further electronic network,
wherein the second and fourth optical wavelengths are different, and
wherein the second and fourth identifier codes are different.

### OWC Method: Downlink and Uplink

Optionally,
wherein the primary OWC apparatus receives first data from the electronic network, generates a first OWC signal including the first data and a first identifier code, and transmits the first OWC signal to each of the one or more secondary OWC apparatuses on a first optical wavelength,
wherein each secondary OWC apparatus detects the first OWC signal on the first optical wavelength, extracts the first identifier code from the detected first OWC signal and, based at least in part on whether the extracted first identifier code matches an identifier code stored in, or available to, the secondary OWC apparatus, extracts the first data from the detected first OWC signal and outputs the extracted first data to the corresponding user device,
wherein the further primary OWC apparatus receives third data from the further electronic network, generates a third OWC signal including the third data and a third identifier code, and transmits the third OWC signal to each of the one or more further secondary OWC apparatuses on a third optical wavelength,
wherein each further secondary OWC apparatus detects the third OWC signal on the third optical wavelength, extracts the third identifier code from the detected third OWC signal and, based at least in part on whether the extracted third identifier code matches an identifier code stored in, or available to, the further secondary OWC apparatus, extracts the third data from the detected third OWC signal and outputs the extracted third data to the corresponding user device,
wherein each secondary OWC apparatus receives second data from the corresponding user device, generates a second OWC signal including the second data and a second identifier code, and transmits the second OWC signal to the primary OWC apparatus on a second optical wavelength,
wherein the primary OWC apparatus detects the second OWC signal on the second optical wavelength, extracts the second identifier code from the detected second OWC signal and, based at least in part on whether the extracted second identifier code matches an identifier code stored in, or available to, the primary OWC apparatus, extracts the second data from the detected second OWC signal and outputs the extracted second data to the electronic network,
wherein each further secondary OWC apparatus receives fourth data from the corresponding user device, generates a fourth OWC signal including the fourth data and a fourth identifier code, and transmits the fourth OWC signal to the further primary OWC apparatus on a fourth optical wavelength,
wherein the further primary OWC apparatus detects the fourth OWC signal on the fourth optical wavelength, extracts the fourth identifier code from the detected fourth OWC signal and, based at least in part on whether the extracted fourth identifier code matches an identifier code stored in, or available to, the further primary OWC apparatus, extracts the fourth data from the detected fourth OWC signal and outputs the extracted fourth data to the further electronic network,
wherein at least one of:
   the first optical wavelength is different to the third optical wavelength; or
   the second optical wavelength is different to the fourth optical wavelength, and
wherein at least one of:
   the first identifier code is different to one or both of the third and fourth identifier codes; or
   the second identifier code is different to one or both of the third and fourth identifier codes.

Optionally, wherein the first and second optical wavelengths are the same and the primary OWC apparatus and each of the secondary OWC apparatuses are configured for half-duplex communication therebetween or wherein the first and second optical wavelengths are different and the primary OWC apparatus and each of the secondary OWC apparatuses are configured for full-duplex communication therebetween.

Optionally, wherein the first and second identifier codes are the same and the primary OWC apparatus and each of the secondary OWC apparatuses are configured for half-duplex communication therebetween or wherein the first and second identifier codes are different and the primary OWC apparatus and each of the secondary OWC apparatuses are configured for full-duplex communication therebetween.

### OWC Method: Using Different Wavelengths, Different Identifier Codes and Different Reference Frequencies for Different Networks

Optionally,
wherein the primary OWC apparatus and each of the secondary OWC apparatuses generate corresponding reference frequencies which are within a predetermined reference frequency range and use the corresponding reference frequencies to generate each of the one or more OWC signals and/or to extract the corresponding data and the corresponding identifier codes from each of the one or more OWC signals,
wherein the further primary OWC apparatus and each of the further secondary OWC apparatuses generate corresponding further reference frequencies which are within a further predetermined reference frequency range and use the corresponding further reference frequencies to generate each of the one or more further OWC signals and/or to extract the corresponding further data and the corresponding further identifier codes from each of the one or more further OWC signals,
wherein the predetermined reference frequency range and the further predetermined reference frequency range are non-overlapping.

### OWC Method: Downlink

Optionally,
wherein the primary OWC apparatus generates a first reference frequency within a predetermined reference frequency range and uses the first reference frequency to generate the first OWC signal,
wherein each secondary OWC apparatus generates a second reference frequency within the predetermined reference frequency range and uses the second reference frequency to extract the first data and the first identifier code from the detected first OWC signal,
wherein the further primary OWC apparatus generates a third reference frequency within a further predetermined reference frequency range and uses the third reference frequency to generate the third OWC signal,
wherein each further secondary OWC apparatus generates a fourth reference frequency within the further predetermined reference frequency range and uses the fourth reference frequency to extract the third data and the third identifier code from the detected third OWC signal, and
wherein the predetermined reference frequency range and the further predetermined reference frequency range are non-overlapping.

### OWC Method: Uplink

Optionally,
wherein each secondary OWC apparatus generates a second reference frequency within a predetermined reference frequency range and uses the second reference frequency to generate the corresponding second OWC signal,
wherein the primary OWC apparatus generates a first reference frequency within the predetermined reference frequency range and uses the first reference frequency to extract the second data and the second identifier code from the detected second OWC signal,
wherein each further secondary OWC apparatus generates a fourth reference frequency within a further predetermined reference frequency range and uses the fourth reference frequency to generate the corresponding fourth OWC signal,
wherein the further primary OWC apparatus generates a third reference frequency within the further predetermined reference frequency range and uses the third reference frequency to extract the fourth data and the fourth identifier code from the detected fourth OWC signal, and
wherein the predetermined reference frequency range and the further predetermined reference frequency range are non-overlapping.

### OWC Method: Uplink and Downlink

Optionally,
wherein the primary OWC apparatus generates a first reference frequency within a predetermined reference frequency range and uses the first reference frequency to generate the first OWC signal and to extract the second data and the second identifier code from the detected second OWC signal,
wherein each secondary OWC apparatus generates a second reference frequency within the predetermined reference frequency range and uses the second reference frequency to extract the first data and the first identifier code from the detected first OWC signal and to generate the corresponding second OWC signal,
wherein the further primary OWC apparatus generates a third reference frequency within a further predetermined reference frequency range and uses the third reference frequency to generate the third OWC signal and to extract the fourth data and the fourth identifier code from the detected fourth OWC signal,
wherein each further secondary OWC apparatus generates a fourth reference frequency within the further predetermined reference frequency range and uses the fourth reference frequency to extract the third data and the third identifier code from the detected third OWC signal and to generate the corresponding fourth OWC signal, and
wherein the predetermined reference frequency range and the further predetermined reference frequency range are non-overlapping.

### Using Different Optical Wavelengths and Different Reference Frequencies for Different OWC Networks

### OWC System

According to an aspect of the present disclosure there is provided an OWC system, comprising:
an OWC network and a further OWC network,
the OWC network comprising:
   a primary OWC apparatus configured for connection to an electronic network; and
   one or more secondary OWC apparatuses, each secondary OWC apparatus configured for incorporation into, or connection to, or comprising part of a corresponding user device, and
the further OWC network comprising:
   a further primary OWC apparatus configured for connection to a further electronic network; and
   one or more further secondary OWC apparatuses, each secondary OWC apparatus configured for incorporation into, or connection to, or comprising part of a corresponding user device,
wherein the primary OWC apparatus and each of the one or more secondary OWC apparatuses are configured to communicate one or more OWC signals therebetween on one or more optical wavelengths, wherein each of the one or more OWC signals includes data, and wherein the primary OWC apparatus and each of the one or more secondary OWC apparatuses are configured to generate corresponding reference frequencies within a predetermined reference frequency range, to use the corresponding reference frequencies to generate the one or more OWC signals, and to use the corresponding reference frequencies to extract the data from each of the one or more OWC signals,
wherein the further primary OWC apparatus and each of the one or more further secondary OWC apparatuses are configured to communicate one or more further OWC signals therebetween on one or more further optical wavelengths, wherein each of the one or more further OWC signals includes further data, and wherein the further primary OWC apparatus and each of the one or more further secondary OWC apparatuses are configured to generate corresponding further reference frequencies within a further predetermined reference frequency range, to use the corresponding further reference frequencies to generate the one or more further OWC signals and to use the corresponding further reference frequencies to extract the further data from each of the one or more further OWC signals,
wherein at least one of the one or more optical wavelengths is different to at least one of the one or more further optical wavelengths, and the predetermined reference frequency range and the further predetermined reference frequency range are non-overlapping.

The primary and the one or more secondary OWC apparatuses may be configured to exchange the optical wireless communication signals according to a communication protocol suitable for optical wireless communication. Similarly, the further primary and the one or more further secondary OWC apparatuses may be configured to exchange the optical wireless communication signals according to a communication protocol suitable for optical wireless communication.

The use of different reference frequencies by the OWC network and the further OWC network in addition to the use of different optical wavelengths by the OWC network and the further OWC network may improve the isolation between the OWC network and the further OWC network. This may be important for security of communications.

Optionally, the reference frequencies used by OWC network and the further reference frequencies used by the further OWC network differ by more than a predetermined reference frequency difference. The reference frequencies used by OWC network and the further reference frequencies used by the further OWC network may be selected to remain distinctly different despite the tolerance variation in the reference frequencies and the tolerance variation in the further reference frequencies.

The electronic network and the further electronic network may be different electronic networks or may be part of the same electronic network.

### OWC System: Downlink

Optionally:
wherein the primary OWC apparatus is configured to generate a first reference frequency within the predetermined reference frequency range, use the first reference frequency to generate a first OWC signal including first data, and transmit the first OWC signal to each of the one or more secondary OWC apparatuses on a first optical wavelength,
wherein each secondary OWC apparatus is configured to detect the first OWC signal on the first optical wavelength, generate a second reference frequency within the predetermined reference frequency range, and use the second reference frequency to extract the first data from the detected first OWC signal,
wherein the further primary OWC apparatus is configured to generate a third reference frequency within the further predetermined reference frequency range, use the third reference frequency to generate a third OWC signal including third data, and transmit the third OWC signal to each of the one or more further secondary OWC apparatuses on a third optical wavelength,
wherein each further secondary OWC apparatus is configured to detect the third OWC signal on the third optical wavelength, generate a fourth reference frequency within the further predetermined reference frequency range, and use the fourth reference frequency to extract the third data from the detected third OWC signal, and
wherein the first and third optical wavelengths are different.

### OWC System: Uplink

Optionally,
wherein each secondary OWC apparatus is configured to generate a second reference frequency within the predetermined reference frequency range, use the second reference frequency to generate a corresponding second OWC signal including corresponding second data, and transmit the corresponding second OWC signal to the primary OWC apparatus on a second optical wavelength,
wherein the primary OWC apparatus is configured to detect the second OWC signal on the second optical wavelength, generate a first reference frequency within the predetermined reference frequency range, and use the first reference frequency to extract the second data from the detected second OWC signal,
wherein each further secondary OWC apparatus is configured to generate a fourth reference frequency within a further predetermined reference frequency range, use the fourth reference frequency to generate a corresponding fourth OWC signal including corresponding fourth data, and transmit the corresponding fourth OWC signal to the further primary OWC apparatus on a fourth optical wavelength,
wherein the further primary OWC apparatus is configured to detect the fourth OWC signal on the fourth optical wavelength, generate a third reference frequency within the further predetermined reference frequency range, and use the third reference frequency to extract the fourth data from the detected fourth OWC signal, and
wherein the second and fourth optical wavelengths are different.

### OWC System: Uplink and Downlink

Optionally,
wherein the primary OWC apparatus is configured to generate a first reference frequency within a predetermined reference frequency range, use the first reference frequency to generate a first OWC signal including first data, and transmit the first OWC signal to each of the one or more secondary OWC apparatuses on a first optical wavelength,
wherein each secondary OWC apparatus is configured to detect the first OWC signal on the first optical wavelength, generate a second reference frequency within the predetermined reference frequency range, and use the second reference frequency to extract the first data from the detected first OWC signal,
wherein the further primary OWC apparatus is configured to generate a third reference frequency within a further predetermined reference frequency range, use the third reference frequency to generate a third OWC signal including third data, and transmit the third OWC signal to each of the one or more further secondary OWC apparatuses on a third optical wavelength,
wherein each further secondary OWC apparatus is configured to detect the third OWC signal on the third optical wavelength, generate a fourth reference frequency within the further predetermined reference frequency range, and use the fourth reference frequency to extract the third data from the detected third OWC signal,
wherein each secondary OWC apparatus is configured to use the second reference frequency to generate a corresponding second OWC signal including corresponding second data and transmit the corresponding second OWC signal to the primary OWC apparatus on a second optical wavelength,
wherein the primary OWC apparatus is configured to detect the second OWC signal on the second optical wavelength and use the first reference frequency to extract the second data from the detected second OWC signal,
wherein each further secondary OWC apparatus is configured to use the fourth reference frequency to generate a corresponding fourth OWC signal including corresponding fourth data and transmit the corresponding fourth OWC signal to the further primary OWC apparatus on a fourth optical wavelength,
wherein the further primary OWC apparatus is configured to detect the fourth OWC signal on the fourth optical wavelength and use the third reference frequency to extract the fourth data from the detected fourth OWC signal, and
wherein at least one of:
   the first optical wavelength is different to the third optical wavelength; or
   the second optical wavelength is different to the fourth optical wavelength.

Optionally, wherein the first and second reference frequencies are sufficiently similar, for example because the predetermined reference frequency range is sufficiently small, that the first and/or second data may be communicated between the primary OWC apparatus and each secondary OWC apparatus using a communication protocol such as IEEE 802.11.

Optionally, the electronic circuitry of the primary OWC apparatus and the electronic circuitry of each secondary OWC apparatus are designed so that the first and second reference frequencies are nominally equal.

Optionally, the first and second reference frequencies differ by less than a predetermined reference clock frequency difference.

Optionally the first and second reference frequency are similar to within a nominal frequency tolerance or frequency error. If the frequency difference is too large the packet decoding is unable to be completed successfully due to errors and the packet is rejected. Error checking may be implemented for example, by an error routine of the OWC protocol.

### OWC System: Using Different Wavelengths, Different Identifier Codes and Different Reference Frequencies for Different Networks

Optionally,
wherein each OWC signal comprises a corresponding identifier code, and
wherein each further OWC signal comprises a corresponding further identifier code,
wherein at least one of the one or more further identifier codes is different to at least one of the one or more identifier codes.

The use of different identifier codes by the OWC network and the further OWC network in addition to the use of different optical wavelengths and the use of different reference frequencies by the OWC network and the further OWC network may further improve the isolation between the OWC network and the further OWC network. This may be important for security of communications, for example where the isolation provided by the use of different optical wavelengths by the OWC network and the further OWC network and the use of different reference frequencies by the OWC network and the further OWC network is not sufficient to provide a required degree of isolation between the OWC network and the further OWC network.

The identifier code may be an arbitrarily generated code. The identifier code may for example be contained in the header of a signal message, for example the IEEE 802.11 supported short sequence and long sequence as well as PN sequences. The PN sequence may be, for example, a Kasami sequence, Gold sequence, Golay sequence, m-sequence, or may be the result of an extensive search with the goal of optimizing the autocorrelation and cross-correlation functions under certain constraints.

### OWC System: Downlink

Optionally,
wherein the primary OWC apparatus is configured to use the first reference frequency to generate the first OWC signal with a first identifier code,
wherein each secondary OWC apparatus is configured to use the second reference frequency to extract the first identifier code from the detected first OWC signal and, based at least in part on whether the extracted first identifier code matches an identifier code stored in, or available to, the secondary OWC apparatus, to extract the first data from the detected first OWC signal and output the extracted first data to the corresponding user device,
wherein the further primary OWC apparatus is configured to use the third reference frequency to generate the third OWC signal with a third identifier code,
wherein each further secondary OWC apparatus is configured to use the fourth reference frequency to extract the third identifier code from the detected third OWC signal and, based at least in part on whether the extracted third identifier code matches an identifier code stored in, or available to, the further secondary OWC apparatus, to extract the third data from the detected third OWC signal and output the extracted third data to the corresponding user device, and
wherein the first and third identifier codes are different.

### OWC System: Uplink

Optionally,
wherein each secondary OWC apparatus is configured to use the second reference frequency to generate the corresponding second OWC signal with a second identifier code,
wherein the primary OWC apparatus is configured to use the first reference frequency to extract the second identifier code from each detected second OWC signal and, based at least in part on whether the extracted second identifier code matches an identifier code stored in, or available to, the primary OWC apparatus, to extract the second data from the detected second OWC signal and output the extracted second data to the electronic network,
wherein each further secondary primary OWC apparatus is configured to use the fourth reference frequency to generate the corresponding fourth OWC signal with a fourth identifier code,
wherein the further primary OWC apparatus is configured to use the third reference frequency to extract the fourth identifier code from the detected fourth OWC signal and, based at least in part on whether the extracted fourth identifier code matches an identifier code stored in, or available to, the further primary OWC apparatus, to extract the fourth data from the detected fourth OWC signal and output the extracted fourth data to the further electronic network, and
wherein the third and fourth identifier codes are different.

### OWC System: Downlink and Uplink

Optionally,
wherein the primary OWC apparatus is configured to use the first reference frequency to generate the first OWC signal with a first identifier code,
wherein each secondary OWC apparatus is configured to use the second reference frequency to extract the first identifier code from the detected first OWC signal and, based at least in part on whether the extracted first identifier code matches an identifier code stored in, or available to, the secondary OWC apparatus, to extract the first data from the detected first OWC signal and output the extracted first data to the corresponding user device,
wherein the further primary OWC apparatus is configured to use the third reference frequency to generate the third OWC signal with a third identifier code,
wherein each further secondary OWC apparatus is configured to use the fourth reference frequency to extract the third identifier code from the detected third OWC signal and, based at least in part on whether the extracted third identifier code matches an identifier code stored in, or available to, the further secondary OWC apparatus, to extract the third data from the detected third OWC signal and output the extracted third data to the corresponding user device,
wherein each secondary OWC apparatus is configured to use the second reference frequency to generate the corresponding second OWC signal with a second identifier code,
wherein the primary OWC apparatus is configured to use the first reference frequency to extract the second identifier code from each detected second OWC signal and, based at least in part on whether the extracted second identifier code matches an identifier code stored in, or available to, the primary OWC apparatus, to extract the second data from the detected second OWC signal and output the extracted second data to the electronic network,
wherein each further secondary OWC apparatus is configured to use the fourth reference frequency to generate the corresponding fourth OWC signal with a fourth identifier code,
wherein the further primary OWC apparatus is configured to use the third reference frequency to extract the fourth identifier code from the detected fourth OWC signal and, based at least in part on whether the extracted fourth identifier code matches an identifier code stored in, or available to, the further primary OWC apparatus, to extract the fourth data from the detected fourth OWC signal and output the extracted fourth data to the further electronic network, and
wherein at least one of:
   the first identifier code is different to one or both of the third and fourth identifier codes; or
   the second identifier code is different to one or both of the third and fourth identifier codes.

Optionally, wherein the first and second optical wavelengths are the same and the primary OWC apparatus and each of the secondary OWC apparatuses are configured for half-duplex communication therebetween or wherein the first and second optical wavelengths are different and the primary OWC apparatus and each of the secondary OWC apparatuses are configured for half-duplex or full-duplex communication therebetween.

Optionally, wherein the first and second identifier codes are the same.

### OWC Network

### Using Different Wavelengths and Different Reference Frequencies for Different Networks

### OWC Network: Downlink

Optionally, wherein:
the primary OWC apparatus comprises:
   electronic circuitry; and
   an OWC transmitter device, and
each secondary OWC apparatus comprises:
   an OWC receiver device; and
   electronic circuitry storing an identifier code,
wherein the electronic circuitry of the primary OWC apparatus is configured to receive the first data from the electronic network, use the first reference frequency to generate the first OWC signal which includes the first data, and cause the OWC transmitter device of the primary OWC apparatus to transmit the first OWC signal on the first optical wavelength to the OWC receiver device of each secondary OWC apparatus, and
wherein the OWC receiver device of each secondary OWC apparatus has a spectral range which includes the first wavelength so that the OWC receiver device of each secondary OWC apparatus detects the first OWC signal, and
wherein the electronic circuitry of each secondary OWC apparatus is configured to use the second reference frequency to extract the first data from the detected first OWC signal and output the extracted first data to the corresponding user device.

The primary OWC apparatus and each of the one or more secondary OWC apparatuses may be configured to exchange the optical communication signals according to an optical wireless communication protocol.

Such an OWC network may provide a downlink from the primary OWC to each secondary OWC apparatus which relies upon the transmission of the first OWC signal on the first optical wavelength, the first OWC signal being generated using the first reference frequency. Each secondary OWC apparatus may be associated with the primary OWC apparatus in the same OWC network in the sense that: (i) the spectral range of the OWC receiver device of each secondary OWC apparatus includes the first optical wavelength; and (ii) the second reference frequency used by each secondary OWC apparatus falls within the same predetermined reference range as the first reference frequency used by the primary OWC apparatus. Such an OWC network may at least reduce the probability that any of the one or more secondary OWC apparatuses outputs further data extracted from a further OWC signal which is carried by light received from a further OWC apparatus belonging to a further OWC network, wherein the light received from the further OWC apparatus includes a further optical wavelength which is different to the first optical wavelength and the further signal is generated using a further reference frequency which falls within a further predetermined reference range, wherein the predetermined reference range and the further predetermined reference range are non-overlapping.

Such an OWC network may prevent any of the one or more secondary OWC apparatuses from outputting further data extracted from a detected further OWC signal, wherein the further OWC signal is carried by light received from a further OWC apparatus belonging to a further OWC network, and wherein the light received from the further OWC apparatus includes a further optical wavelength which is different to the first optical wavelength and the further OWC signal is generated using a further reference frequency which falls within a further predetermined reference range, wherein the predetermined reference range and the further predetermined reference range are non-overlapping.

As such, the OWC network is configured to separate or isolate the OWC network from the further OWC network. For example, the OWC network may be configured to prevent or reduce cross-talk between the OWC network and the further OWC network.

Optionally, wherein the OWC receiver device of each secondary OWC apparatus comprises a photodetector and a first optical filter such as a first optical interference filter, wherein the first optical filter defines, at least in part, the spectral range of the OWC receiver device of the secondary OWC apparatus.

For a given level of cross-talk between the OWC network and the further OWC network, the use of different reference frequencies may enable the use of one or more secondary OWC apparatuses which each comprise an OWC receiver device having a broader spectral range. For example, the use of a first reference frequency to generate the first OWC signal may enable the use of one or more secondary OWC apparatuses which each comprise an OWC receiver device which includes a filter such as an interference filter having a broader spectral passband. This may be advantageous because filters such as interference filters having broader spectral passbands are easier and more cost-effective to manufacture than filters such as interference filters having narrower spectral passbands. Additionally a broader spectral filter can provide a higher power density at the receiver enabling the use of lower cost transmitters and receivers.

Optionally, wherein the first OWC signal comprises one or more packets, and the first is carried by the one or more packets.

Optionally, the first optical wavelength is in the visible or IR region of the electromagnetic spectrum.

Optionally, the first OWC signal comprises a baseband signal that occupies a frequency band from 0 Hz (or close to 0 Hz) to some arbitrary cut-off frequency. This is in contrast with intermediate frequency (IF) or RF signals that are modulated on a carrier frequency.

Optionally, the first OWC signal comprises a modulated signal such as an OFDM signal or a QAM signal.

Optionally, the electronic circuitry of the primary OWC apparatus comprises a modulator, for example a modem, for generating the first OWC signal.

Optionally, the electronic circuitry of each secondary OWC apparatus comprises a demodulator, for example a modem, for demodulating the detected first OWC signal so as to form a demodulated first signal.

### OWC Network: Uplink

Optionally, wherein:
the primary OWC apparatus comprises:
   electronic circuitry; and
   an OWC receiver device storing an identifier code, and
each secondary OWC apparatus comprises:
   an OWC transmitter device; and
   electronic circuitry,
wherein the electronic circuitry of each secondary OWC apparatus is configured to receive corresponding second data from the corresponding user device, to use the second reference frequency to generate the corresponding second OWC signal which includes the corresponding second data, and to cause the OWC transmitter device to transmit the corresponding second OWC signal on the second optical wavelength to the OWC receiver device of the primary OWC apparatus, and
wherein the OWC receiver device of the primary OWC apparatus has a spectral range which includes the second wavelength so that the OWC receiver device of the primary OWC apparatus detects the second OWC signal, and
wherein, for each secondary OWC apparatus, the electronic circuitry of the primary OWC apparatus is configured to use first reference frequency to extract the second data from the detected second OWC signal and output the extracted second data from the primary OWC apparatus to the electronic network.

Optionally, wherein the OWC receiver device of the primary OWC apparatus comprises a photodetector and a second optical filter such as a second optical interference filter, wherein the second optical filter defines, at least in part, the spectral range of the OWC receiver device of the primary OWC apparatus.

For a given level of cross-talk between the OWC network and the further OWC network, the use of different reference frequencies may enable the use of a primary OWC apparatus which comprises an OWC receiver device having a broader spectral range. For example, the use of a second reference frequency to generate each second OWC signal may enable the use of a primary OWC apparatus which comprises an OWC receiver device which includes a filter such as an interference filter having a broader spectral passband. This may be advantageous because filters such as interference filters having broader spectral passbands are easier and more cost-effective to manufacture than filters such as interference filters having narrower spectral passbands. Additionally a broader spectral filter can provide a higher power density at the receiver enabling the use of lower cost transmitters and receivers.

Optionally, wherein the second OWC signal comprises one or more packets, and the second is carried by the one or more packets.

Optionally, the second optical wavelength is in the visible or IR region of the electromagnetic spectrum.

Optionally, the second OWC signal comprises a baseband signal that occupies a frequency band from 0 Hz (or close to 0 Hz) to some arbitrary cut-off frequency. This is in contrast with intermediate frequency (IF) or **RF** signals that are modulated on a carrier frequency.

Optionally, each second OWC signal comprises a modulated signal such as an OFDM signal or a QAM signal.

Optionally, the electronic circuitry of each secondary OWC apparatus comprises a modulator, for example a modem, for generating the corresponding second OWC signal.

Optionally, the electronic circuitry of the primary OWC apparatus comprises a demodulator, for example a modem, for demodulating each detected second OWC signal so as to form a corresponding demodulated second signal.

Optionally, the first optical wavelength is in the visible region of the electromagnetic spectrum and the second optical wavelength is in the IR region of the electromagnetic spectrum.

### OWC Network: Using Different Wavelengths, Different Identifier Codes and Different Reference Frequencies for Different Networks

### OWC Network: Downlink

Optionally,
wherein the electronic circuitry of the primary OWC apparatus is configured to use the first reference frequency to generate the first OWC signal with a first identifier code,
wherein the electronic circuitry of each secondary OWC apparatus is configured to use the second reference frequency to extract the first identifier code from the detected first OWC signal and, based at least in part on whether the extracted first identifier code matches an identifier code stored in, or available to, the secondary OWC apparatus, to extract the first data from the detected first OWC signal and output the extracted first data to the corresponding user device.

### OWC Network: Uplink

Optionally,
wherein the electronic circuitry of each secondary OWC apparatus is configured to use the second reference frequency to generate the corresponding second OWC signal with a second identifier code,
wherein the electronic circuitry of the primary OWC apparatus is configured to use the first reference frequency to extract the second identifier code from each detected second OWC signal and, based at least in part on whether the extracted second identifier code matches an identifier code stored in, or available to, the primary OWC apparatus, to extract the second data from the detected second OWC signal and output the extracted second data to the electronic network.

### OWC Method

According to an aspect of the present disclosure there is provided an OWC method, comprising:
communicating one or more OWC signals between a primary OWC apparatus of an OWC network and one or more secondary OWC apparatuses of the OWC network on one or more optical wavelengths, wherein each of the one or more OWC signals includes data and is generated using a corresponding reference frequency which is within a predetermined reference frequency range; and
communicating one or more further OWC signals between a further primary OWC apparatus of a further OWC network and one or more further secondary OWC apparatuses of the further OWC network on one or more further optical wavelengths, wherein each of the one or more further OWC signals includes further data and is generated using a corresponding further reference frequency which is within a further predetermined reference frequency range,
wherein at least one of the one or more optical wavelengths is different to at least one of the one or more further optical wavelengths, and the predetermined reference frequency range and the further predetermined reference frequency range are non-overlapping.

### OWC Method: Downlink

Optionally:
wherein the primary OWC apparatus generates a first reference frequency within a predetermined reference frequency range, uses the first reference frequency to generate a first OWC signal including first data, and transmits the first OWC signal to each of the one or more secondary OWC apparatuses on a first optical wavelength,
wherein each secondary OWC apparatus detects the first OWC signal on the first optical wavelength, generates a second reference frequency within the predetermined reference frequency range, and uses the second reference frequency to extract the first data from the detected first OWC signal,
wherein the further primary OWC apparatus generates a third reference frequency within a further predetermined reference frequency range, uses the third reference frequency to generate a third OWC signal including third data, and transmits the third OWC signal to each of the one or more further secondary OWC apparatuses on a third optical wavelength,
wherein each further secondary OWC apparatus detects the third OWC signal on the third optical wavelength, generates a fourth reference frequency within the further predetermined reference frequency range, and uses the fourth reference frequency to extract the third data from the detected third OWC signal,
wherein the first and third optical wavelengths are different.

### OWC Method: Uplink

Optionally,
wherein each secondary OWC apparatus generates a second reference frequency within the predetermined reference frequency range, uses the second reference frequency to generate a corresponding second OWC signal including corresponding second data, and transmits the corresponding second OWC signal to the primary OWC apparatus on a second optical wavelength,
wherein the primary OWC apparatus detects the second OWC signal on the second optical wavelength, generates a first reference frequency within the predetermined reference frequency range, and uses the first reference frequency to extract the second data from the detected second OWC signal,
wherein each further secondary OWC apparatus generates a fourth reference frequency within a further predetermined reference frequency range, uses the fourth reference frequency to generate a corresponding fourth OWC signal including corresponding fourth data, and transmits the corresponding fourth OWC signal to the further primary OWC apparatus on a fourth optical wavelength,
wherein the further primary OWC apparatus detects the fourth OWC signal on the fourth optical wavelength, generates a third reference frequency within the further predetermined reference frequency range, and uses the third reference frequency to extract the fourth data from the detected fourth OWC signal, and
wherein the second and fourth optical wavelengths are different.

### OWC Method: Uplink and Downlink

Optionally,
wherein the primary OWC apparatus generates a first reference frequency within a predetermined reference frequency range, uses the first reference frequency to generate a first OWC signal including first data, and transmits the first OWC signal to each of the one or more secondary OWC apparatuses on a first optical wavelength,
wherein each secondary OWC apparatus detects the first OWC signal on the first optical wavelength, generates a second reference frequency within the predetermined reference frequency range, and uses the second reference frequency to extract the first data from the detected first OWC signal,
wherein the further primary OWC apparatus generates a third reference frequency within a further predetermined reference frequency range, uses the third reference frequency to generate a third OWC signal including third data, and transmits the third OWC signal to each of the one or more further secondary OWC apparatuses on a third optical wavelength,
wherein each further secondary OWC apparatus detects the third OWC signal on the third optical wavelength, generates a fourth reference frequency within the further predetermined reference frequency range, and uses the fourth reference frequency to extract the third data from the detected third OWC signal,
wherein each secondary OWC apparatus uses the second reference frequency to generate a corresponding second OWC signal including corresponding second data and transmits the corresponding second OWC signal to the primary OWC apparatus on a second optical wavelength,
wherein the primary OWC apparatus detects the second OWC signal on the second optical wavelength and uses the first reference frequency to extract the second data from the detected second OWC signal,
wherein each further secondary OWC apparatus uses the fourth reference frequency to generate a corresponding fourth OWC signal including corresponding fourth data and transmits the corresponding fourth OWC signal to the further primary OWC apparatus on a fourth optical wavelength,
wherein the further primary OWC apparatus detects the fourth OWC signal on the fourth optical wavelength and uses the third reference frequency to extract the fourth data from the detected fourth OWC signal, and
wherein at least one of:
   the first optical wavelength is different to the third optical wavelength; or
   the second optical wavelength is different to the fourth optical wavelength.

### OWC Method: Using Different Wavelengths, Different Identifier Codes and Different Reference Frequencies for Different Networks

Optionally,
wherein each OWC signal comprises a corresponding identifier code,
wherein each further OWC signal comprises a corresponding further identifier code, and
wherein at least one of the one or more further identifier codes is different to at least one of the one or more identifier codes.

### OWC Method: Downlink

Optionally,
wherein the primary OWC apparatus uses the first reference frequency to generate the first OWC signal with a first identifier code,
wherein each secondary OWC apparatus uses the second reference frequency to extract the first identifier code from the detected first OWC signal and, based at least in part on whether the extracted first identifier code matches an identifier code stored in, or available to, the secondary OWC apparatus, extracts the first data from the detected first OWC signal and output the extracted first data to the corresponding user device,
wherein the further primary OWC apparatus uses the third reference frequency to generate the third OWC signal with a third identifier code,
wherein each further secondary OWC apparatus uses the fourth reference frequency to extract the third identifier code from the detected third OWC signal and, based at least in part on whether the extracted third identifier code matches an identifier code stored in, or available to, the further secondary OWC apparatus, extracts the third data from the detected third OWC signal and output the extracted third data to the corresponding user device, and
wherein the first and third identifier codes are different.

### OWC Method: Uplink

Optionally,
wherein each secondary OWC apparatus uses the second reference frequency to generate the corresponding second OWC signal with a second identifier code,
wherein the primary OWC apparatus uses the first reference frequency to extract the second identifier code from each detected second OWC signal and, based at least in part on whether the extracted second identifier code matches an identifier code stored in, or available to, the primary OWC apparatus, extracts the second data from the detected second OWC signal and output the extracted second data to the electronic network,
wherein each further secondary primary OWC apparatus uses the fourth reference frequency to generate the corresponding fourth OWC signal with a fourth identifier code,
wherein the further primary OWC apparatus uses the third reference frequency to extract the fourth identifier code from the detected fourth OWC signal and, based at least in part on whether the extracted fourth identifier code matches an identifier code stored in, or available to, the further primary OWC apparatus, extracts the fourth data from the detected fourth OWC signal and output the extracted fourth data to the further electronic network, and
wherein the second and fourth identifier codes are different.

### OWC Method: Downlink and Uplink

Optionally,
wherein the primary OWC apparatus uses the first reference frequency to generate the first OWC signal with a first identifier code,
wherein each secondary OWC apparatus uses the second reference frequency to extract the first identifier code from the detected first OWC signal and, based at least in part on whether the extracted first identifier code matches an identifier code stored in, or available to, the secondary OWC apparatus, extracts the first data from the detected first OWC signal and output the extracted first data to the corresponding user device,
wherein the further primary OWC apparatus uses the third reference frequency to generate the third OWC signal with a third identifier code,
wherein each further secondary OWC apparatus uses the fourth reference frequency to extract the third identifier code from the detected third OWC signal and, based at least in part on whether the extracted third identifier code matches an identifier code stored in, or available to, the further secondary OWC apparatus, extracts the third data from the detected third OWC signal and output the extracted third data to the corresponding user device,
wherein each secondary OWC apparatus uses the second reference frequency to generate the corresponding second OWC signal with a second identifier code,
wherein the primary OWC apparatus uses the first reference frequency to extract the second identifier code from each detected second OWC signal and, based at least in part on whether the extracted second identifier code matches an identifier code stored in, or available to, the primary OWC apparatus, extracts the second data from the detected second OWC signal and output the extracted second data to the electronic network,
wherein each further secondary primary OWC apparatus uses the fourth reference frequency to generate the corresponding fourth OWC signal with a fourth identifier code,
wherein the further primary OWC apparatus uses the third reference frequency to extract the fourth identifier code from the detected fourth OWC signal and, based at least in part on whether the extracted fourth identifier code matches an identifier code stored in, or available to, the further primary OWC apparatus, extracts the fourth data from the detected fourth OWC signal and output the extracted fourth data to the further electronic network, and
wherein at least one of:
   the first identifier code is different to one or both of the third and fourth identifier codes; or
   the second identifier code is different to one or both of the third and fourth identifier codes.

Optionally, wherein the first and second identifier codes are the same and the primary OWC apparatus and each of the secondary OWC apparatuses are configured for half-duplex communication therebetween or wherein the first and second identifier codes are different and the primary OWC apparatus and each of the secondary OWC apparatuses are configured for full-duplex communication therebetween.

It should be understood that any one or more of the features of any one of the foregoing aspects of the present disclosure may be combined with any one or more of the features of any of the other foregoing aspects of the present disclosure.

### BRIEF DESCRIPTION OF THE DRAWINGS

An OWC system and associated methods will now be described by way of nonlimiting example only with reference to the accompanying drawings of which:
FIG. 1 is a schematic of an OWC system comprising first and second OWC networks, illustrating a method of isolating the first and second OWC networks;
FIG. 2A is a schematic of an access point of either of the first and second OWC networks of the OWC system of FIG. 1;
FIG. 2B is a schematic of a station of either of the first and second OWC networks of the OWC system of FIG. 1;
FIG. 3 illustrates "blue", "green" and "red" interference filter responses at normal incidence;
FIG. 4 illustrates "blue" and "red" interference filter responses at normal incidence and a "green" interference filter response at a large angle of incidence;
FIG. 5 illustrates a spatial arrangement of the access points and stations of the OWC system of FIG. 1 corresponding to the interference filter responses shown in FIG. 4;
FIG. 6 illustrates "blue", "green" and "red" interference filter responses at normal incidence having a reduced spectral range;
FIG. 7 is a schematic of the OWC system of FIG. 1, illustrating a first improved method of isolating the first and second OWC networks;
FIG. 8 illustrates the structure of a data packet;
FIG. 9 illustrates the results of a correlation of a first identifier code with itself and with a second identifier code;
FIG. 10 is a schematic of the OWC system of FIG. 1, illustrating a second improved method of isolating the first and second OWC networks; and
FIG. 11 illustrates an OWC network in which the transmitter and receiver in the same OWC network use the same or similar nominal reference frequencies f₁ and f₂ having the same or similar frequency tolerances e₁ and e₂, such that the actual reference frequencies used by the transmitter and receiver in the same OWC network fall within a predetermined frequency range which is sufficiently small to allow OWC communication between the transmitter and receiver in the same OWC network.

### DETAILED DESCRIPTION OF THE DRAWINGS

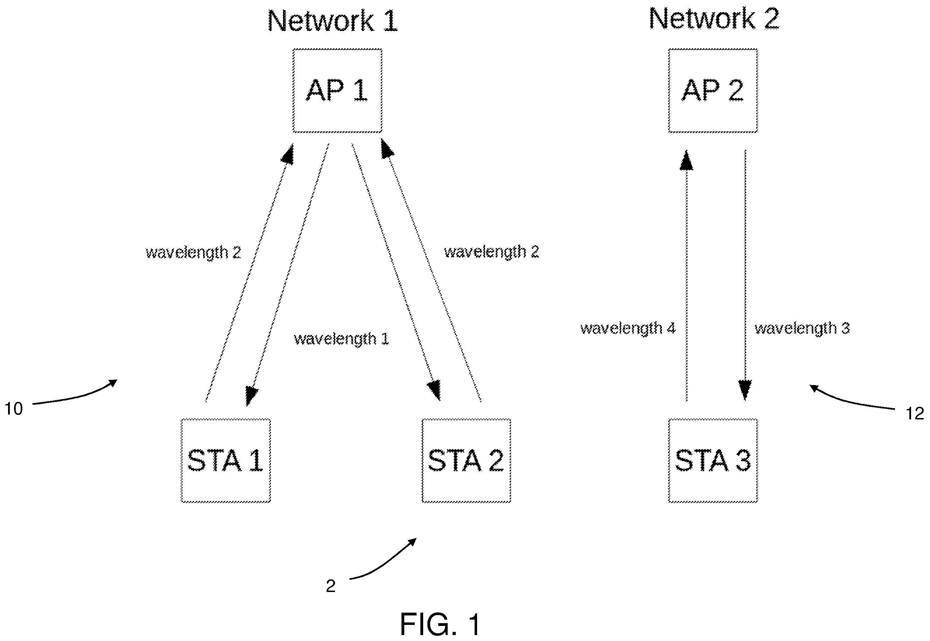

Referring initially to FIG. 1 there is shown an OWC system generally designated 2 including a first OWC network generally designated 10 and a second OWC network generally designated 12. The first OWC network 10 includes a primary OWC apparatus in the form of an access point AP1 and two secondary OWC apparatuses in the form of two stations STA1 and STA2. AP1 is configured for OWC with each of STA1 and STA2. As will be explained in more detail below, AP1, STA1 and STA2 are configured for full-duplex communication between AP1 and each of STA1 and STA2.

Similarly, the second OWC network 12 includes a primary OWC apparatus in the form of an access point AP2 and a secondary OWC apparatus in the form of a single station STA3. AP2 is configured for OWC with STA3. As will be explained in more detail below, AP2 and STA3 are configured for full-duplex communication.

It should be understood that AP1 and AP2 may be configured for communication with different electronic networks (not shown) or the same electronic network.

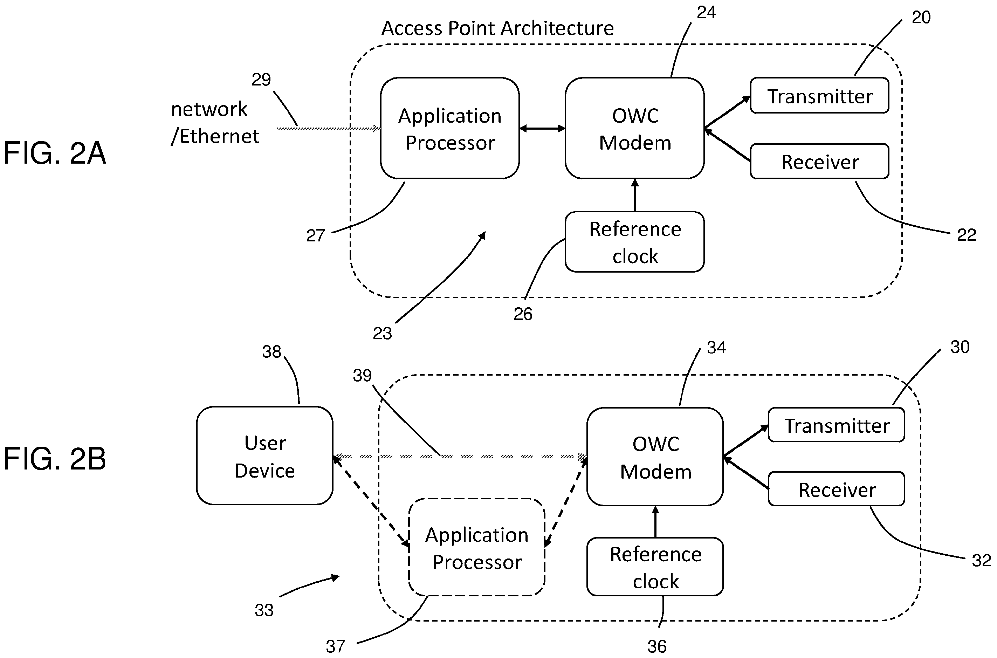

FIG. 2A shows the architecture of each of the access points AP1 and AP2. Each access point AP1 and AP2 includes an OWC transmitter device 20, an OWC receiver device 22, and electronic circuitry generally designated 23 which includes an OWC modem 24, a reference frequency generator 26, and a processing resource in the form of an application processor 27. The application processor 27 is configured for communication with one or more remote devices or networks (not shown) via a wired ethernet connection 29. The modem 24 is configured for communication with the application processor 27, the OWC transmitter device 20, the OWC receiver device 22, and the reference frequency generator 26.

The OWC transmitter device 20 includes a light emitting diode (LED), laser or other suitable light source. The OWC modem 24 includes associated driving circuit to drive the LED or laser to produce an OWC signal. The associated driving circuitry includes a digital to analogue convertor configured to provide a modulation signal at a frequency characteristic of the OWC signal. The OWC modem 24 modulates data onto a drive current and the driving circuit provides the drive current to the LED or laser. The LED or laser then produces an outgoing modulated OWC signal that carries the data. The OWC modem 24 may include a processing resource and associated volatile or non-volatile memory.

The OWC receiver device 22 includes an optical filter such as an optical interference filter and a photodiode, or other suitable light detector. The OWC receiver device 22 includes conditioning circuitry for conditioning any OWC signal detected by the photodiode. The photodiode converts received light to an electronic signal which is then conditioned by the conditioning circuitry. Conditioning may include one or more filter steps; amplification of a weak electrical signal; and equalisation of received signals. The OWC modem 24 converts the analogue signals into digital signals using an analogue to digital convertor. The digital signals can then be provided to the processing resource, provided as part of, or associated with the OWC modem 24, to be demodulated to extract the data communicated with the OWC signal.

FIG. 2B shows the architecture of each of the stations STA1, STA2 an STA3. Each station STA1, STA2 an STA3 includes an OWC transmitter device 30, an OWC receiver device 32, and electronic circuitry generally designated 33 which includes an OWC modem 34 and a reference frequency generator 36. The modem 34 is incorporated into, or configured for communication with, a user device such as a mobile electronic device 38 via a wired connection 39. The modem 34 is further configured for communication with the OWC transmitter device 30, the OWC receiver device 32, and the reference frequency generator 36.

In some embodiments a station may optionally include an application processor 37 which may be configured for connection or communication with one or more remote devices or electronic networks (not shown) via a wired ethernet or wireless connection (not shown).

In some embodiments, the station architecture may incorporate or comprise the user device 38.

The OWC transmitter device 30 includes a light emitting diode (LED), laser or other suitable light source. The OWC modem 34 includes associated driving circuit to drive the LED or laser to produce an OWC signal. The associated driving circuitry includes a digital to analogue convertor configured to provide a modulation signal at a frequency characteristic of the OWC signal. The OWC modem 34 modulates data onto a drive current and the driving circuit provides the drive current to the LED or laser. The LED or laser then produces an outgoing modulated OWC signal that carries the data. The OWC modem 34 may include a processing resource and associated volatile or non-volatile memory.

The OWC receiver device 32 includes an optical filter such as an optical interference filter and a photodiode, or other suitable light detector. The OWC receiver device 32 includes conditioning circuitry for conditioning any OWC signal detected by the photodiode. The photodiode converts received light to an electronic signal which is then conditioned by the conditioning circuitry. Conditioning may include one or more filter steps, amplification of a weak electrical signal, and equalisation of received signals. The OWC modem 34 converts the analogue signals into digital signals using an analogue to digital convertor. The digital signals can then be provided to the processing resource, provided as part of, or associated with the OWC modem 34, to be demodulated to extract the data communicated with the OWC signal.

Any suitable modulation scheme may be used, for example orthogonal frequency division multiplexing (OFDM) modulation schemes are used in some embodiments, and the demodulation is a demodulation from the OFDM modulation scheme. In some embodiments, other modulation schemes may be used. The modulation scheme may form part of an OWC communication protocol, such that the OWC signal is produced according to the OWC communication protocol

In some embodiments the OWC communication protocol may for example be a packet based protocol. The OWC communication protocol may send messages including header and payload portions in accordance with known techniques and the processing resource and components thereof perform packet detection to establish validity of packets being transmitted or received.

The OWC transmitter device 20 of AP1 is configured to emit light including a first wavelength. The OWC receiver device 32 of each of STA1 and STA2 is configured to detect light which is incident on the OWC receiver device 32 of each of STA1 and STA2 in a spectral range which includes the first wavelength. Specifically, the OWC receiver device 32 of each of STA1 and STA2 includes a photodetector and a first interference filter in front of the photodetector, wherein the first interference filter at least partially defines a spectral passband which includes the first wavelength. The OWC transmitter device 30 of each of STA1 and STA2 is configured to emit light including a second wavelength. The OWC receiver device 22 of AP1 is configured to detect light which is incident on the OWC receiver device 22 of AP1 in a spectral range which includes the second wavelength. Specifically, the OWC receiver device 22 of AP1 includes a photodetector and a second interference filter in front of the photodetector, wherein the second interference filter at least partially defines a spectral passband which includes the second wavelength.

The OWC transmitter device 20 of AP2 is configured to emit light including a third wavelength. The OWC receiver device 32 of STA3 is configured to detect light which is incident on the OWC receiver device 32 of STA3 in a spectral range which includes the third wavelength. Specifically, the OWC receiver device 32 of STA3 includes a photodetector and a third interference filter in front of the photodetector, wherein the third interference filter at least partially defines a spectral passband which includes the third wavelength. The OWC transmitter device 30 of STA3 is configured to emit light including a fourth wavelength. The OWC receiver device 22 of AP2 is configured to detect light which is incident on the OWC receiver device 22 of AP2 in a spectral range which includes the fourth wavelength. Specifically, the OWC receiver device 22 of AP2 includes a photodetector and a fourth interference filter in front of the photodetector, wherein the fourth interference filter at least partially defines a spectral passband which includes the fourth wavelength.

In use, the application processor 27 of AP1 receives first data from an electronic network (not shown) via the wired ethernet connection 29 and the modem 24 of AP1 uses a reference frequency generated by the reference frequency generator 26 to generate a first OWC signal which includes the first data. The first OWC signal is then used to modulate the intensity of the light emitted by the OWC transmitter device 20 of AP1 at the first wavelength and the light carrying the first signal is transmitted from the OWC transmitter device 20 of AP1 to the corresponding stations STA1 and STA2. At each of STA1 and STA2, the OWC receiver device 32 detects the first OWC signal, and the modem 34 uses a reference frequency generated by the reference frequency generator 36 to extract the first data and output the first data to the corresponding user device 38 so as to complete the downlink of the first data from AP1 to the corresponding stations STA1 and STA2 on the first wavelength.

Similarly, at each of STA1 and STA2, the modem 34 receives corresponding second data from the corresponding user device 38 and the modem 34 uses a reference frequency generated by the reference frequency generator 36 to generate a corresponding second signal which includes the corresponding second data. At each of STA1 and STA2, the corresponding second signal is then used to modulate the intensity of the light emitted by the OWC transmitter device 30 at the second wavelength and the light carrying the second signal is transmitted to the OWC receiver device 22 of AP1. For each of STA1 and STA2, the OWC receiver device 22 of AP1 detects the second signal, and the modem 24 uses a reference frequency generated by the reference frequency generator 26 to extract the corresponding second data and outputs the corresponding second data to the electronic network (not shown) via the application processor 27 and the wired ethernet connection 29 so as to complete the uplink of data from each of STA1 and STA2 to the corresponding access point AP1 on the second wavelength.

Full-duplex communication is thereby enabled between AP1 and each of STA1 and STA2

Similarly, the downlink of third data is accomplished from AP2 to the corresponding station STA3 on the third wavelength and the uplink of fourth data is accomplished from STA3 to the corresponding access point AP2 on the fourth wavelength so as to enable full-duplex communication between AP2 and STA3.

At normal incidence, the first interference filter is configured to pass the first wavelength and to reject each of the second, third and fourth wavelengths. At normal incidence, the second interference filter is configured to pass the second wavelength and to reject each of the first, third and fourth wavelengths. At normal incidence, the third interference filter is configured to pass the third wavelength and to reject each of the first, second and fourth wavelengths. At normal incidence, the fourth interference filter is configured to pass the fourth wavelength and to reject each of the first, second and third wavelengths. Thus, at normal incidence, the use of WDM whereby different wavelengths are used by the first and second OWC networks 10, 12 may be sufficient to provide a desired degree of separation or isolation between the first and second OWC networks 10, 12.

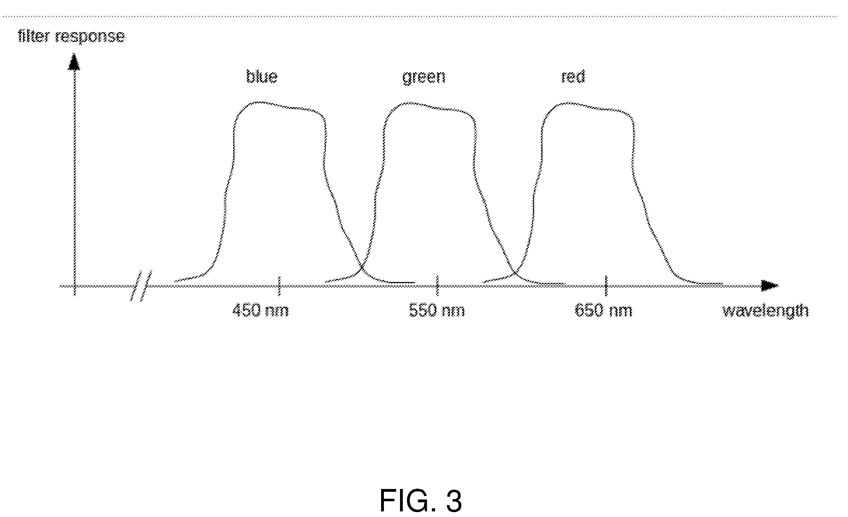

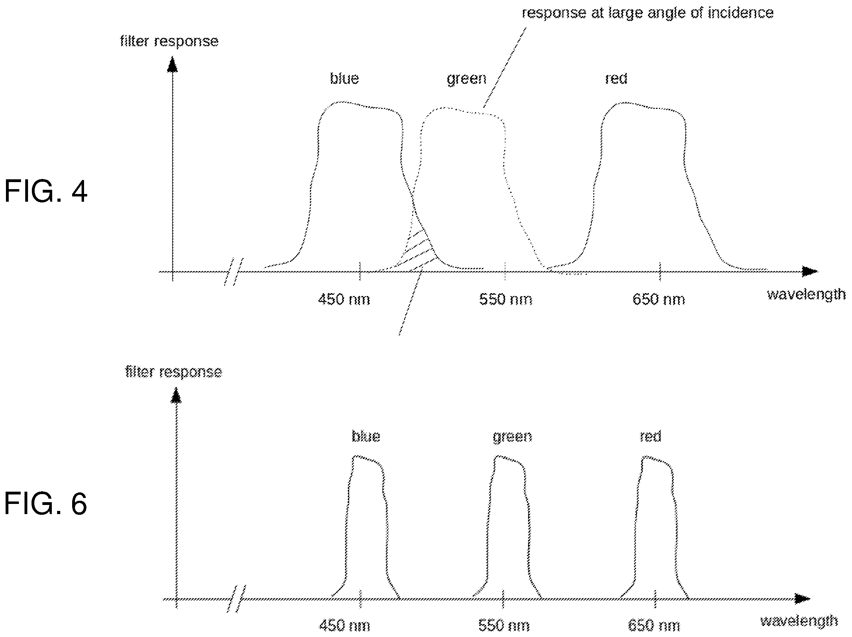

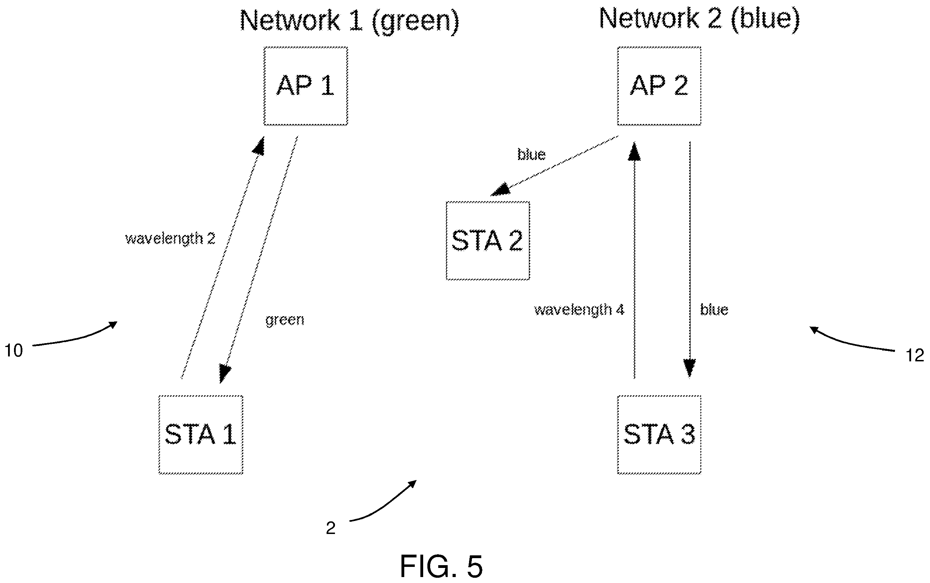

However, the degree of separation or isolation between the first and second OWC networks 10, 12 may not be sufficient for some technical applications. Moreover, as will now be explained with reference to FIGS. 3 to 5, the centre wavelength of an interference filter shifts to shorter wavelengths when the angle of incidence increases. FIG. 3 shows an interference filter response at normal incidence for a "blue" station which has a centre wavelength of approximately 450 nm, an interference filter response at normal incidence for a "green" station which has a centre wavelength of approximately 550 nm, and an interference filter response at normal incidence for a "red" station which has a centre wavelength of approximately 650 nm. At high angles of incidence the response of the interference filters shifts towards the blue, as shown for the green interference filter in FIG. 4. In effect, this means that, at a high enough high angle of incidence, a "green" STA having a green interference filter can receive a signal transmitted on a "blue" wavelength meant for a "blue" STA having a blue interference filter as shown in FIG. 5. Specifically, if a user with "green" STA2 is positioned with respect to the "blue" AP2 at a high enough angle of incidence, the user with the "green" STA2 may intercept the data sent by the "blue" AP2. One solution to this problem would be to make the interference filters more narrowband as shown in FIG. 6. The problem with this approach is that the amount of power reaching the photodetectors is reduced thus requiring the transmission of more power and/or a more sensitive photodetector for a given signal-to-noise ratio or a more expensive transmitter with a narrower band transmission spectrum.

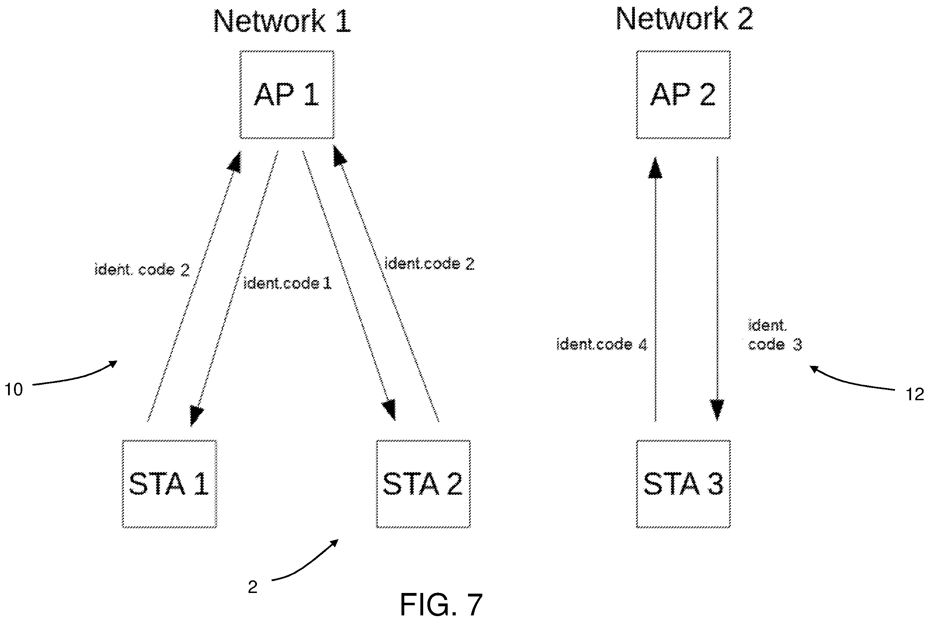

FIG. 7 illustrates a first method for improving the isolation of the first and second OWC networks 10, 12. Like the WDM method described with reference to FIGS. 1 to 6, the method of FIG. 7 uses a first wavelength for the downlink from AP1 to STA1 and STA2 and a second wavelength for the uplink from STA1 and STA2 to AP1. Like the WDM method described with reference to FIGS. 1 to 6, the method of FIG. 7 uses a third wavelength for the downlink from AP2 to STA3 and a fourth wavelength for the uplink from STA3 to AP2.

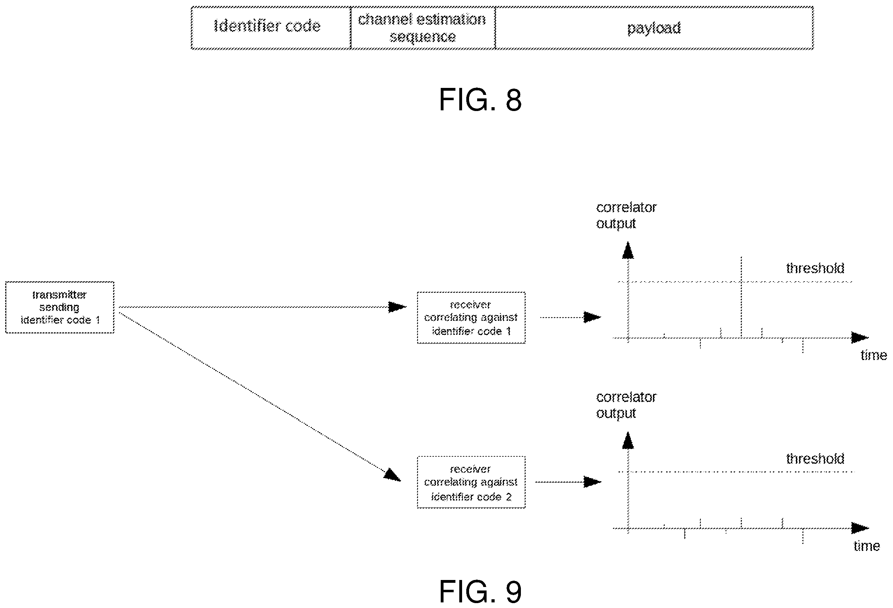

In more detail, the application processor 27 of AP1 receives first data from an electronic network (not shown) via the wired ethernet connection 29 and the modem 24 of AP1 uses a reference frequency generated by the reference frequency generator 26 to generate a first OWC signal which includes the first data and a first identifier code such as a first PN sequence. Specifically, the first OWC signal includes one or more data packets comprising similar content to that shown in FIG. 8, wherein each data packet comprises a header which includes a first identifier code and a payload which includes at least a portion of the first data. The first OWC signal is then used to modulate the intensity of the light emitted by the OWC transmitter device 20 of AP1 at the first wavelength and the light carrying the first OWC signal is transmitted from the OWC transmitter device 20 of AP1 to the corresponding stations STA1 and STA2. At each of STA1 and STA2, the OWC receiver device 32 detects the first signal, and the modem 34 uses a reference frequency generated by the reference frequency generator 36 to extract the first identifier code from the detected first OWC signal. Based at least in part on whether the extracted first identifier code matches a identifier code which is stored in, or available to, the modem 34, the modem 34 then extracts the first data from the detected first OWC signal and outputs the extracted first data from each of STA1 and STA2 to the corresponding user device 38 so as to complete the downlink of the first data from AP1 to the corresponding stations STA1 and STA2 on the first wavelength. As illustrated in FIG. 9, the modem 34 determines whether the extracted first identifier code matches the identifier code which is stored in, or available to, the modem 34 using a suitable comparison or correlation method. More specifically for example, the modem 34 stores a threshold correlation value. Furthermore, the modem 34 is configured to correlate the extracted first identifier code with the stored identifier code so as to generate a correlation value and to determine whether the extracted first identifier code matches the stored identifier code. This assessment may be made by comparison of the determined correlation value against the stored threshold correlation value.

Similarly, at each of STA1 and STA2, the modem 34 receives corresponding second data from the corresponding user device 38 and the modem 34 uses a reference frequency generated by the reference frequency generator 36 to generate a corresponding second OWC signal which includes the corresponding second data and a second identifier code such as a second PN sequence. Specifically, the corresponding second OWC signal includes one or more data packets comprising similar content to that shown in FIG. 8, wherein each data packet comprises a header which includes a second identifier code and a payload which includes at least a portion of the second data. At each of STA1 and STA2, the corresponding second OWC signal is then used to modulate the intensity of the light emitted by the OWC transmitter device 30 at the second wavelength and the light carrying the second OWC signal is transmitted to the OWC receiver device 22 of AP1. For each of STA1 and STA2, the OWC receiver device 22 of AP1 detects the corresponding second OWC signal, and the modem 24 uses a reference frequency generated by the reference frequency generator 26 to extract the corresponding second identifier code from the detected second OWC signal. Based at least in part on whether the extracted second identifier code matches a identifier code which is stored in, or available to, the modem 24, the modem 24 then extracts the second data included with the second OWC signal and outputs the extracted second data to the electronic network (not shown) via the application processor 27 and the wired ethernet connection 29 so as to complete the uplink of data from each of STA1 and STA2 to the corresponding access point AP1 on the second wavelength. As illustrated in FIG. 9, the modem 24 determines whether the extracted second identifier code matches the identifier code which is stored in, or available to, the modem 24 using a correlation method. More specifically, the modem 24 stores a threshold correlation value. Furthermore, the modem 24 is configured to correlate the extracted second identifier code with the stored identifier code so as to generate a correlation value and to determine whether the extracted second identifier code matches the stored identifier code. This determination is made by comparison of the determined correlation value against the stored threshold correlation value.

In effect therefore, the downlink of the first data is accomplished from AP1 to each of STA1 and STA2 on the first wavelength using the first identifier code and the uplink of data is accomplished from each of STA1 and STA2 to the corresponding access point AP1 on the second wavelength using the second identifier code so as to enable full-duplex communication between AP1 and each of STA1 and STA2. Full-duplex communication is thereby enabled between AP1 and each of STA1 and STA2.

Similarly, the downlink of the third data is accomplished from AP2 to the corresponding station STA3 on the third wavelength using a third identifier code and the uplink of data is accomplished from STA3 to the corresponding access point AP2 on the fourth wavelength using a fourth identifier code so as to enable full-duplex communication between AP2 and STA3.

As a consequence of the use of different identifier codes by the first and second networks 10, 12 in addition to the use of WDM, the isolation of the first and second networks 10, 12 may be improved.

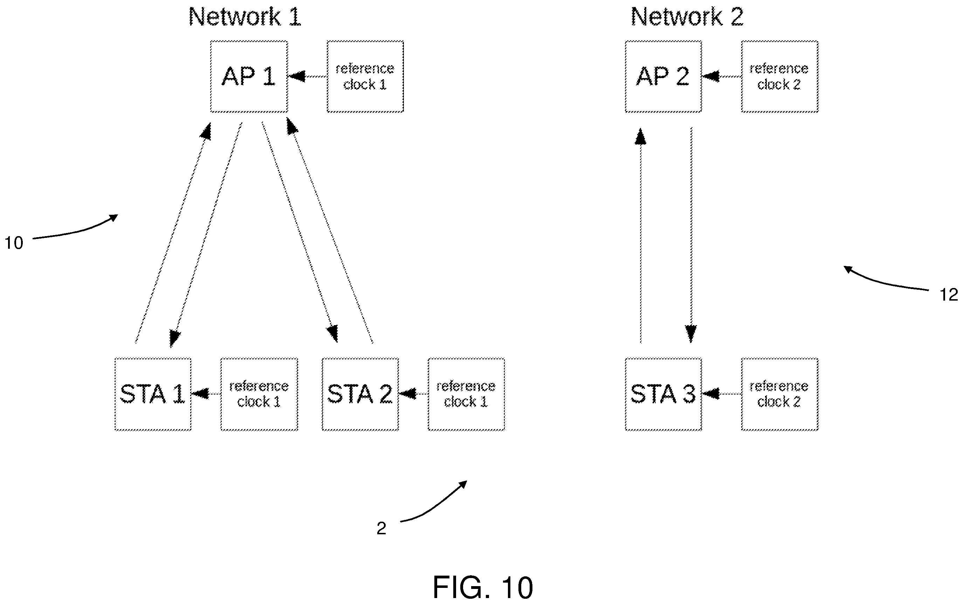

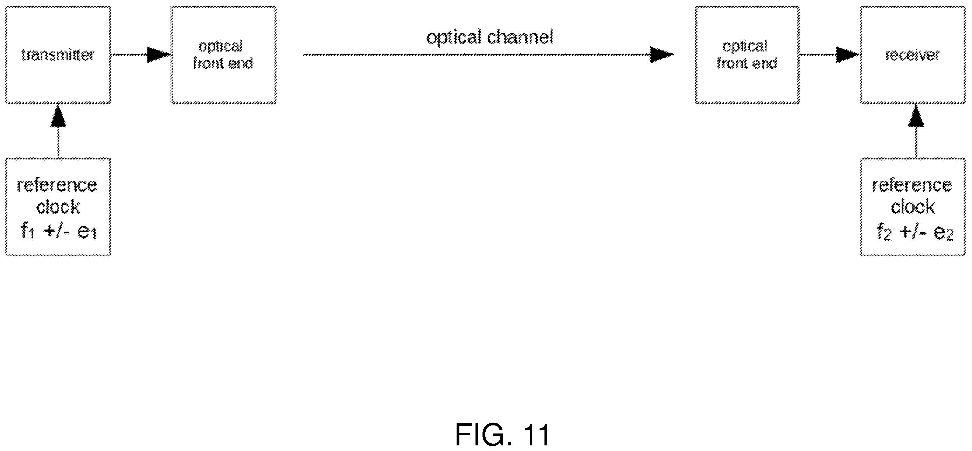

FIG. 10 illustrates a second method for improving the isolation of the first and second OWC networks 10, 12. A digital transmitter and receiver need a reference frequency or clock to which is the same or similar. In general, the nominal reference frequency of a primary OWC apparatus and each secondary OWC apparatus in the same OWC network will be the same i.e. the primary OWC apparatus and each secondary OWC apparatus in the same OWC network will be designed so as to have the same nominal reference frequency. However, in practice, manufacturing tolerances mean that the primary OWC apparatus and each secondary OWC apparatus in the same OWC network may have slightly different reference frequencies. However, provided the reference frequencies of the primary OWC apparatus and each secondary OWC apparatus in the same OWC network are sufficiently similar, then OWC communication may still be achieved between the primary OWC apparatus and each secondary OWC apparatus. For example with reference to FIG. 11, the nominal reference frequencies f₁, f₂ and the frequency deviations e₁, e₂ will be different due to manufacturing tolerances. However, it should be understood that if f₁+e₁, f₁-e₁, f₂+e₂ and f₂-e₂ all fall within a predetermined reference frequency range which is small enough, then OWC communication may be achieved between the primary OWC apparatus and each secondary OWC apparatus.

Every oscillator exhibits a certain frequency error or deviation from the nominal frequency. Digital receivers can handle a certain amount of frequency error. To help isolate the first and second OWC networks 10, 12, a reference frequency error is introduced deliberately which is too large to be handled by receivers and/or associated communication protocols from a different OWC network. The differences in the reference frequencies between isolated networks are chosen to be such that a transmitted optical signal derived from a specific network reference frequency can only be received and processed by an optical receiver device configured for use in the same network..

Like the WDM method described with reference to FIGS. 1 to 6, the method of FIG. 10 uses a first wavelength for the downlink from AP1 to STA1 and STA2 and a second wavelength for the uplink from STA1 and STA2 to AP1. Like the WDM method described with reference to FIGS. 1 to 6, the method of FIG. 10 uses a third wavelength for the downlink from AP2 to STA3 and a fourth wavelength for the uplink from STA3 to AP2.

In more detail, the application processor 27 of AP1 receives first data from an electronic network (not shown) via the wired ethernet connection 29. The reference frequency generator 26 generates a first reference frequency and the modem 24 of AP1 uses the first reference frequency to generate a first OWC signal which includes the first data. Specifically, the first OWC signal includes one or more data packets, wherein each data packet comprises a payload which includes at least a portion of the first data. The first OWC signal is then used to modulate the intensity of the light emitted by the OWC transmitter device 20 of AP1 at the first wavelength and the light carrying the first OWC signal is transmitted from the OWC transmitter device 20 of AP1 to the corresponding stations STA1 and STA2. At each of STA1 and STA2, the OWC receiver device 32 detects the first OWC signal. The reference frequency generator 36 generates a second reference frequency which is matched and similar to the first reference frequency within a predetermined frequency range or tolerance.

In preferred embodiments the first and second reference clock frequencies have a similar frequency within a predetermined frequency range or tolerance and the first OWC signal detected by the receiver device 32 is able to be successfully decoded by the data decoding function of the STA device with minimal errors due to use of such a similar reference frequency.

The modem 34 extracts the first data from the detected first OWC signal and outputs the extracted first data from each of STA1 and STA2 to the corresponding user device 38 so as to complete the downlink of the first data from AP1 to the corresponding stations STA1 and STA2 on the first wavelength.

If the first and second reference frequencies are sufficiently different then the packet decoding of the first OWC signal detected by the receiver device 32 is unable to be completed successfully due to high error detection by the decoding process leading to unrecoverable errors, the packet is rejected, and the data transfer fails. Error checking may be implemented for example, by an error routine of the communication protocol.

In some embodiments the modem 34 uses the second reference frequency to determine an error value. Based at least in part on a comparison of the error value to a threshold error value which is stored in, or available to, the modem 34, the modem 34 then extracts the first data from the detected first OWC signal and outputs the extracted first data from each of STA1 and STA2 to the corresponding user device 38 so as to complete the downlink of the first data from AP1 to the corresponding stations STA1 and STA2 on the first wavelength.

Similarly, at each of STA1 and STA2, the modem 34 receives corresponding second data from the corresponding user device 38 and the modem 34 uses the second reference frequency generated by the reference frequency generator 36 to generate a corresponding second OWC signal which includes the corresponding second data. Specifically, the corresponding second OWC signal includes one or more data packets, wherein each data packet comprises a payload which includes at least a portion of the second data. At each of STA1 and STA2, the corresponding second OWC signal is then used to modulate the intensity of the light emitted by the OWC transmitter device 30 at the second wavelength and the light carrying the second OWC signal is transmitted to the OWC receiver device 22 of AP1.

For each of STA1 and STA2, the OWC receiver device 22 of AP1 detects the corresponding second OWC signal. In preferred embodiments the first reference frequency of AP1 and the second reference frequencies of STA1 and STA2 are similar within a predetermined frequency range or tolerance and the corresponding second OWC signal detected by the OWC receiver device 22 of AP1 is able to be successfully decoded by the packet decoding function of the AP1 device with minimal errors due to the use of such a similar reference frequency.

The modem 24 then extracts the second data from the detected second OWC signal and outputs the extracted second data to the electronic network (not shown) via the application processor 27 and the wired ethernet connection 29 so as to complete the uplink of data from each of STA1 and STA2 to the corresponding access point AP1 on the second wavelength.

If the first and second reference frequencies are sufficiently different then the packet decoding of the corresponding second OWC signal detected by the AP1 receiver device 22 is unable to be completed successfully due to high error detection by the decoding process leading to unrecoverable errors, the packet is rejected and the data transfer fails. Error checking may be implemented for example, by an error routine of the OWC protocol.

In alternative embodiments for each of STA1 and STA2, the OWC receiver device 22 of AP1 detects the corresponding second OWC signal and the modem 24 uses the first reference frequency generated by the reference frequency generator 26 to determine an error value. Based at least in part on a comparison of the error value to a threshold error value which is stored in, or available to, the modem 24, the modem 24 then extracts the second data included with the second OWC signal and outputs the extracted second data to the electronic network (not shown) via the application processor 27 and the wired ethernet connection 29 so as to complete the uplink of data from each of STA1 and STA2 to the corresponding access point AP1 on the second wavelength.

In effect therefore, the downlink of the first data is accomplished from AP1 to each of STA1 and STA2 on the first wavelength using the first reference frequency and the uplink of data is accomplished from each of STA1 and STA2 to the corresponding access point AP1 on the second wavelength using a second reference frequency which is matched to the first reference frequency so as to enable full-duplex communication between AP1 and each of STA1 and STA2. Full-duplex communication is thereby enabled between AP1 and each of STA1 and STA2.

Similarly, the downlink of the third data is accomplished from AP2 to the corresponding station STA3 on the third wavelength using a third reference frequency and the uplink of data is accomplished from STA3 to the corresponding access point AP2 on the fourth wavelength using a fourth reference frequency which is matched to the third reference frequency so as to enable full-duplex communication between AP2 and STA3, wherein the third and fourth reference frequencies fall within a further predetermined frequency range or tolerance, and wherein the predetermined frequency range or tolerance and the further predetermined frequency range or tolerance are non-overlapping.

As a consequence of the use of reference frequencies in non-overlapping predetermined frequency ranges by the first and second networks 10, 12 in addition to the use of WDM, the isolation of the first and second networks 10, 12 may be improved.

Although preferred embodiments of the disclosure have been described in terms as set forth above, it should be understood that these embodiments are illustrative only and that the claims are not limited to those embodiments. Those skilled in the art will understand that various modifications may be made to the described embodiments without departing from the scope of the appended claims. For example, the first and second networks 10, 12 may use different arbitrarily generated codes as identifier codes. Each different identifier code may be contained in the header of a corresponding signal message, for example a IEEE 802.11 supported short sequence or long sequence. Each different identifier code may comprise a different PN sequence such as a different Kasami sequence, a different Gold sequence, a different Golay sequence, or a different m-sequence.

The first and second networks 10, 12 may use different identifier codes and different reference frequencies in addition to WDM to further improve the isolation of the first and second networks 10, 12.

Moreover, the first OWC signal generated by the primary OWC apparatus AP1 may include a dedicated clock signal which may be used by the OWC modem and processor and/or receiver of each secondary OWC apparatus STA1 and STA2 to extract the first data, and optionally also the first identifier code, from the detected first OWC signal. Similarly, the second OWC signals generated by the secondary OWC apparatuses STA1 and STA2 may each include a dedicated clock signal which may be used by the OWC modem and processor and/or receiver of the primary OWC apparatus AP1 to extract the corresponding second data, and optionally also the corresponding second identifier code, from the corresponding detected second OWC signal.

In some OWC network embodiments, the AP device and the STA device or the communication protocol used for communication between the devices may not support full-duplex communication and the communication between the AP and the STA may operate in half-duplex mode such that the AP is either transmitting or receiving. For half-duplex operation in some OWC network embodiments, the downlink wavelength from the AP to the STA may be a different wavelength to the uplink wavelength from the STA to the AP. For half-duplex operation, in other OWC network embodiments, the downlink and uplink wavelengths may be the same.

For half-duplex operation in some OWC network embodiments, the downlink identifier code from the AP to the STA may be a different identifier code to the uplink identifier code from the STA to the AP. For half-duplex operation in other OWC network embodiments, the downlink and uplink identifier codes may be the same.

In some embodiments, the user device may be a mobile device such as a phone or laptop or computer device or equipment comprising a computer device. The user device may be connected or connectable to an external electronic network by wired or wireless connection. In some embodiments the primary apparatus may be configured for incorporation into, or connection to, or comprising a mobile device or computer device or luminaire or additional device.

The skilled person will understand that in the preceding description and appended claims, positional terms such as 'above', 'along', 'side', etc. are made with reference to conceptual illustrations, such as those shown in the appended drawings. These terms are used for ease of reference but are not intended to be of limiting nature. These terms are therefore to be understood as referring to an object when in an orientation as shown in the accompanying drawings.

Use of the term "comprising" when used in relation to a feature of an embodiment of the present disclosure does not exclude other features or steps. Use of the term "a" or "an" when used in relation to a feature of an embodiment of the present disclosure does not exclude the possibility that the embodiment may include a plurality of such features.

The use of reference signs in the claims should not be construed as limiting the scope of the claims.

## Claims

1. An optical wireless communication system (2), comprising:
an optical wireless communication network (10) and a further optical wireless communication network (12),
the optical wireless communication network (10) comprising:
a primary optical wireless communication apparatus (AP1) configured for connection to an electronic network; and
one or more secondary optical wireless communication apparatuses (STA1, STA2), each secondary optical wireless communication apparatus (STA1, STA2) configured for incorporation into, or connection to, or comprising part of, a corresponding user device, and
the further optical wireless communication network (12) comprising:
a further primary optical wireless communication apparatus (AP2) configured for connection to the electronic network or a further electronic network; and
one or more further secondary optical wireless communication apparatuses (STA3), each further secondary optical wireless communication apparatus (STA3) configured for incorporation into, or connection to, or comprising part of, a corresponding user device,
wherein the primary optical wireless communication apparatus (AP1) and each of the one or more secondary optical wireless communication apparatuses (STA1, STA2) are configured to communicate one or more optical wireless communication signals therebetween on one or more optical wavelengths, wherein each of the one or more optical wireless communication signals includes data, and wherein the primary optical wireless communication apparatus (AP1) and each of the one or more secondary optical wireless communication apparatuses (STA1, STA2) are configured to generate corresponding reference clock frequencies within a predetermined reference clock frequency range. to use the corresponding reference clock frequencies to generate the one or more optical wireless communication signals, and to use the corresponding reference clock frequencies to extract the data from each of the one or more optical wireless communication signals,
wherein the further primary optical wireless communication apparatus (AP2) and each of the one or more further secondary optical wireless communication apparatuses (STA3) are configured to communicate one or more further optical wireless communication signals therebetween on one or more further optical wavelengths, wherein each of the one or more further optical wireless communication signals includes further data, and wherein the further primary optical wireless communication apparatus (AP2) and each of the one or more further secondary optical wireless communication apparatuses (STA3) are configured to generate corresponding further reference clock frequencies within a further predetermined reference clock frequency range, to use the corresponding further reference clock frequencies to generate the one or more further optical wireless communication signals, and to use the corresponding further reference clock frequencies to extract the further data from each of the one or more further optical wireless communication signals,
wherein at least one of the one or more optical wavelengths is different to at least one of the one or more further optical wavelengths, and the predetermined reference clock frequency range and the further predetermined reference clock frequency range are non-overlapping.

2. The optical wireless communication system (2) of claim 1,
wherein the primary optical wireless communication apparatus (AP1) is configured to generate a first reference clock frequency within the predetermined reference clock frequency range, use the first reference clock frequency to generate a first optical wireless communication signal including first data, and transmit the first optical wireless communication signal to each of the one or more secondary optical wireless communication apparatuses (STA1, STA2) on a first optical wavelength,
wherein each secondary optical wireless communication apparatus (STA1, STA2) is configured to detect the first optical wireless communication signal on the first optical wavelength, generate a second reference clock frequency within the predetermined reference clock frequency range, and use the second reference clock frequency to extract the first data from the detected first optical wireless communication signal,
wherein the further primary optical wireless communication apparatus (AP2) is configured to generate a third reference clock frequency within the further predetermined reference clock frequency range, use the third reference clock frequency to generate a third optical wireless communication signal including third data, and transmit the third optical wireless communication signal to each of the one or more further secondary optical wireless communication apparatuses (STA3) on a third optical wavelength,
wherein each further secondary optical wireless communication apparatus (STA3) is configured to detect the third optical wireless communication signal on the third optical wavelength, generate a fourth reference clock frequency within the further predetermined reference clock frequency range, and use the fourth reference clock frequency to extract the third data from the detected third optical wireless communication signal, and
wherein the first and third optical wavelengths are different.

3. The optical wireless communication system (2) of claim 1,
wherein each secondary optical wireless communication apparatus (STA1, STA2) is configured to generate a second reference clock frequency within the predetermined reference clock frequency range, use the second reference clock frequency to generate a corresponding second optical wireless communication signal including corresponding second data, and transmit the corresponding second optical wireless communication signal to the primary optical wireless communication apparatus (AP1) on a second optical wavelength,
wherein the primary optical wireless communication apparatus (AP1) is configured to detect the second optical wireless communication signal on the second optical wavelength, generate a first reference clock frequency within the predetermined reference clock frequency range, and use the first reference clock frequency to extract the second data from the detected second optical wireless communication signal,
wherein each further secondary optical wireless communication apparatus (STA3) is configured to generate a fourth reference clock frequency within the further predetermined reference clock frequency range, use the fourth reference clock frequency to generate a corresponding fourth optical wireless communication signal including corresponding fourth data, and transmit the corresponding fourth optical wireless communication signal to the further primary optical wireless communication apparatus (AP1) on a fourth optical wavelength,
wherein the further primary optical wireless communication apparatus (AP1) is configured to detect the fourth optical wireless communication signal on the fourth optical wavelength, generate a third reference clock frequency within the further predetermined reference clock frequency range, and use the third reference clock frequency to extract the fourth data from the detected fourth optical wireless communication signal, and
wherein the second and fourth optical wavelengths are different.

4. The optical wireless communication system (2) of claim 1,
wherein the primary optical wireless communication apparatus (AP1) is configured to generate a first reference clock frequency within the predetermined reference clock frequency range, use the first reference clock frequency to generate a first optical wireless communication signal including first data, and transmit the first optical wireless communication signal to each of the one or more secondary optical wireless communication apparatuses (STA1, STA2) on a first optical wavelength,
wherein each secondary optical wireless communication apparatus (STA1, STA2) is configured to detect the first optical wireless communication signal on the first optical wavelength, generate a second reference clock frequency within the predetermined reference clock frequency range, and use the second reference clock frequency to extract the first data from the detected first optical wireless communication signal,
wherein the further primary optical wireless communication apparatus (AP2) is configured to generate a third reference clock frequency within the further predetermined reference clock frequency range, use the third reference clock frequency to generate a third optical wireless communication signal including third data, and transmit the third optical wireless communication signal to each of the one or more further secondary optical wireless communication apparatuses (STA3) on a third optical wavelength,
wherein each further secondary optical wireless communication apparatus (STA3) is configured to detect the third optical wireless communication signal on the third optical wavelength, generate a fourth reference clock frequency within the further predetermined reference clock frequency range, and use the fourth reference clock frequency to extract the third data from the detected third optical wireless communication signal,
wherein each secondary optical wireless communication apparatus (STA1, STA2) is configured to use the second reference clock frequency to generate a corresponding second optical wireless communication signal including corresponding second data and transmit the corresponding second optical wireless communication signal to the primary optical wireless communication apparatus (AP1) on a second optical wavelength,
wherein the primary optical wireless communication apparatus (AP1) is configured to detect the second optical wireless communication signal on the second optical wavelength and use the first reference clock frequency to extract the second data from the detected second optical wireless communication signal,
wherein each further secondary optical wireless communication apparatus (STA3) is configured to use the fourth reference clock frequency to generate a corresponding fourth optical wireless communication signal including corresponding fourth data and transmit the corresponding fourth optical wireless communication signal to the further primary optical wireless communication apparatus (AP2) on a fourth optical wavelength,
wherein the further primary optical wireless communication apparatus (AP2) is configured to detect the fourth optical wireless communication signal on the fourth optical wavelength and use the third reference clock frequency to extract the fourth data from the detected fourth optical wireless communication signal, and
wherein at least one of:
the first optical wavelength is different to the third optical wavelength; or
the second optical wavelength is different to the fourth optical wavelength.

5. The optical wireless communication system (2) of claim 1,
wherein each optical wireless communication signal comprises a corresponding identifier code, and
wherein each further optical wireless communication signal comprises a corresponding further identifier code,
wherein at least one of the one or more further identifier codes is different to at least one of the one or more identifier codes.

6. The optical wireless communication system (2) of claim 2,
wherein the primary optical wireless communication apparatus (AP1) is configured to use the first reference clock frequency to generate the first optical wireless communication signal with a first identifier code,
wherein each secondary optical wireless communication apparatus (STA1, STA2) is configured to use the second reference clock frequency to extract the first identifier code from the detected first optical wireless communication signal and, based at least in part on whether the extracted first identifier code matches an identifier code stored in, or available to, the secondary optical wireless communication apparatus (STA1, STA2), to extract the first data from the detected first optical wireless communication signal and output the extracted first data to the corresponding user device,
wherein the further primary optical wireless communication apparatus (AP2) is configured to use the third reference clock frequency to generate the third optical wireless communication signal with a third identifier code,
wherein each further secondary optical wireless communication apparatus (STA3) is configured to use the fourth reference clock frequency to extract the third identifier code from the detected third optical wireless communication signal and, based at least in part on whether the extracted third identifier code matches an identifier code stored in, or available to, the further secondary optical wireless communication apparatus (STA3), to extract the third data from the detected third optical wireless communication signal and output the extracted third data to the corresponding user device, and
wherein the first and third identifier codes are different.

7. The optical wireless communication system (2) of claim 3,
wherein each secondary optical wireless communication apparatus (STA1, STA2) is configured to use the second reference clock frequency to generate the corresponding second optical wireless communication signal with a second identifier code,
wherein the primary optical wireless communication apparatus (AP1) is configured to use the first reference clock frequency to extract the second identifier code from each detected second optical wireless communication signal and, based at least in part on whether the extracted second identifier code matches an identifier code stored in, or available to, the primary optical wireless communication apparatus (AP1), to extract the second data from the detected second optical wireless communication signal and output the extracted second data to the electronic network,
wherein each further secondary optical wireless communication apparatus (STA3) is configured to use the fourth reference clock frequency to generate the corresponding fourth optical wireless communication signal with a fourth identifier code,
wherein the further primary optical wireless communication apparatus (AP2) is configured to use the third reference clock frequency to extract the fourth identifier code from the detected fourth optical wireless communication signal and, based at least in part on whether the extracted fourth identifier code matches an identifier code stored in, or available to, the further primary optical wireless communication apparatus (AP2), to extract the fourth data from the detected fourth optical wireless communication signal and output the extracted fourth data to the electronic network or the further electronic network, and
wherein the second and fourth identifier codes are different.

8. The optical wireless communication system (2) of claim 3,
wherein the primary optical wireless communication apparatus (AP1) is configured to use the first reference clock frequency to generate the first optical wireless communication signal with a first identifier code,
wherein each secondary optical wireless communication apparatus (STA1, STA2) is configured to use the second reference clock frequency to extract the first identifier code from the detected first optical wireless communication signal and, based at least in part on whether the extracted first identifier code matches an identifier code stored in, or available to, the secondary optical wireless communication apparatus (STA1, STA2), to extract the first data from the detected first optical wireless communication signal and output the extracted first data to the corresponding user device,
wherein the further primary optical wireless communication apparatus (AP2) is configured to use the third reference clock frequency to generate the third optical wireless communication signal with a third identifier code,
wherein each further secondary optical wireless communication apparatus (STA3) is configured to use the fourth reference clock frequency to extract the third identifier code from the detected third optical wireless communication signal and, based at least in part on whether the extracted third identifier code matches an identifier code stored in, or available to, the further secondary optical wireless communication apparatus (STA3), to extract the third data from the detected third optical wireless communication signal and output the extracted third data to the corresponding user device,
wherein each secondary optical wireless communication apparatus (STA1, STA2) is configured to use the second reference clock frequency to generate the corresponding second optical wireless communication signal with a second identifier code,
wherein the primary optical wireless communication apparatus (AP1) is configured to use the first reference clock frequency to extract the second identifier code from each detected second optical wireless communication signal and, based at least in part on whether the extracted second identifier code matches an identifier code stored in, or available to, the primary optical wireless communication apparatus (AP1), to extract the second data from the detected second optical wireless communication signal and output the extracted second data to the electronic network,
wherein each further secondary optical wireless communication apparatus (STA3) is configured to use the fourth reference clock frequency to generate the corresponding fourth optical wireless communication signal with a fourth identifier code,
wherein the further primary optical wireless communication apparatus (AP2) is configured to use the third reference clock frequency to extract the fourth identifier code from the detected fourth optical wireless communication signal and, based at least in part on whether the extracted fourth identifier code matches an identifier code stored in, or available to, the further primary optical wireless communication apparatus (AP2), to extract the fourth data from the detected fourth optical wireless communication signal and output the extracted fourth data to the electronic network or the further electronic network, and
wherein at least one of:
the first identifier code is different to one or both of the third and fourth identifier codes; or
the second identifier code is different to one or both of the third and fourth identifier codes.

9. The optical wireless communication system (2) of claim 8, wherein the first and second optical wavelengths are the same and the primary optical wireless communication apparatus (AP1) and each of the secondary optical wireless communication apparatuses (STA1, STA2) are configured for half-duplex communication therebetween or wherein the first and second optical wavelengths are different and the primary optical wireless communication apparatus (AP1) and each of the secondary optical wireless communication apparatuses (STA1, STA2) are configured for half-duplex or full-duplex communication therebetween.

10. The optical wireless communication system (2) of claim 8 or 9, wherein the first and second identifier codes are the same.

11. The optical wireless communication system (2) of any one of claims 2, 4, 6, or 8 to 10, wherein the first optical wireless communication signal comprises one or more packets, the first data is carried by the one or more packets, and each packet comprises a header, wherein the header includes the first identifier code.

12. The optical wireless communication system (2) of any one of claims 3, 4, 7, or 8 to 10, wherein the second optical wireless communication signal comprises one or more packets, the second data is carried by the one or more packets, and each packet comprises a header, wherein the header includes the second identifier code.

13. The optical wireless communication system (2) of any one of claims 5 to 12,
wherein each secondary optical wireless communication apparatus (STA1, STA2) comprises electronic circuitry which is configured to store or define a cryptographic key in hardware and wherein the electronic circuitry of each secondary optical wireless communication apparatus (STA1, STA2) is configured to prevent firmware, including an identifier code, from being stored in the electronic circuitry of each secondary optical wireless communication apparatus (STA1, STA2) unless that firmware, including an identifier code, can be authenticated and/or decrypted by the stored or defined cryptographic key, and/or
wherein each identifier code comprises an arbitrarily generated code, each identifier code is contained in the header of a signal message, for example a IEEE 802.11 supported short sequence or long sequence, or wherein each identifier code comprises a PN sequence such as a Kasami sequence, a Gold sequence, a Golay sequence, an m-sequence.

14. The optical wireless communication system (2) of any one of claims 2 to 12, wherein the first and second reference clock frequencies are sufficiently similar, for example because the predetermined reference clock frequency range is sufficiently small, that the first and/or second data may be communicated between the primary optical wireless communication apparatus (AP1) and each secondary optical wireless communication apparatus (STA1, STA2) using a communication protocol such as IEEE 802.11.

15. An optical wireless communication method, comprising:
communicating one or more optical wireless communication signals between a primary optical wireless communication apparatus (AP1) of an optical wireless communication network (10) and one or more secondary optical wireless communication apparatuses (STA1, STA2) of the optical wireless communication network (10) on one or more optical wavelengths, wherein each of the one or more optical wireless communication signals includes data and is generated using a corresponding reference clock frequency which is within a predetermined reference clock frequency range; and
communicating one or more further optical wireless communication signals between a further primary optical wireless communication apparatus (AP2) of a further optical wireless communication network (12) and one or more further secondary optical wireless communication apparatuses (STA3) of the further optical wireless communication network (12) on one or more further optical wavelengths, wherein each of the one or more further optical wireless communication signals includes further data and is generated using a corresponding further reference clock frequency which is within a further predetermined reference clock frequency range,
wherein the primary optical wireless communication apparatus (AP1) is configured for connection to an electronic network and the further primary optical wireless communication apparatus (AP2) is configured for connection to the electronic network or a further electronic network, wherein at least one of the one or more optical wavelengths is different to at least one of the one or more further optical wavelengths, and wherein the predetermined reference clock frequency range and the further predetermined reference clock frequency range are non-overlapping, and optionally
wherein each optical wireless communication signal comprises a corresponding identifier code, each further optical wireless communication signal comprises a corresponding further identifier code, and at least one of the one or more further identifier codes is different to at least one of the one or more identifier codes.

## Patentansprüche

1. Optisches Drahtlos-Kommunikationssystem (2), das Folgendes umfasst:
ein optisches Drahtlos-Kommunikationsnetz (10) und ein weiteres optisches Drahtlos-Kommunikationsnetz (12),
wobei das optische Drahtlos-Kommunikationsnetz (10) Folgendes umfasst:
eine primäre optische Drahtlos-Kommunikationsvorrichtung (AP1), die zur Verbindung mit einem elektronischen Netz konfiguriert ist, und
eine oder mehrere sekundäre optische Drahtlos-Kommunikationsvorrichtungen (STA1, STA2), wobei jede sekundäre optische Drahtlos-Kommunikationsvorrichtung (STA1, STA2) zum Einbau in oder Anschluss an ein entsprechendes Benutzergerät konfiguriert ist oder einen Teil desselben umfasst, und
wobei das weitere optische Drahtlos-Kommunikationsnetz (12) Folgendes umfasst:
eine weitere primäre optische Drahtlos-Kommunikationsvorrichtung (AP2), die zur Verbindung mit dem elektronischen Netz oder einem weiteren elektronischen Netz konfiguriert ist, und
eine oder mehrere weitere sekundäre optische Drahtlos-Kommunikationsvorrichtungen (STA3), wobei jede weitere sekundäre optische Drahtlos-Kommunikationsvorrichtung (STA3) zum Einbau in oder Anschluss an ein entsprechendes Benutzergerät konfiguriert ist oder einen Teil desselben umfasst,
wobei die primäre optische Drahtlos-Kommunikationsvorrichtung (AP1) und jede von der einen oder den mehreren sekundären optischen Drahtlos-Kommunikationsvorrichtungen (STA1, STA2) dafür konfiguriert sind, ein oder mehrere optische Drahtlos-Kommunikationssignale zwischen denselben auf einer oder mehreren optischen Wellenlängen zu kommunizieren, wobei jedes von dem einen oder den mehreren optischen Drahtlos-Kommunikationssignalen Daten einschließt, und wobei die primäre optische Drahtlos-Kommunikationsvorrichtung (AP1) und jede von der einen oder den mehreren sekundären optischen Drahtlos-Kommunikationsvorrichtungen (STA1, STA2) dafür konfiguriert sind, entsprechende Referenz-Taktfrequenzen innerhalb eines vorbestimmten Referenz-Taktfrequenzbereichs zu erzeugen, um die entsprechenden Referenz-Taktfrequenzen zu verwenden, um das eine oder die mehreren optischen Drahtlos-Kommunikationssignale zu erzeugen, und die entsprechenden Referenz-Taktfrequenzen zu verwenden, um die Daten aus jedem von dem einen oder den mehreren optischen Drahtlos-Kommunikationssignalen zu extrahieren,
wobei die weitere primäre optische Drahtlos-Kommunikationsvorrichtung (AP2) und jede von der einen oder den mehreren weiteren sekundären optischen Drahtlos-Kommunikationsvorrichtungen (STA3) dafür konfiguriert sind, ein oder mehrere weitere optische Drahtlos-Kommunikationssignale zwischen denselben auf einer oder mehreren weiteren optischen Wellenlängen zu kommunizieren, wobei jedes von dem einen oder den mehreren weiteren optischen Drahtlos-Kommunikationssignalen weitere Daten einschließt, und wobei die weitere primäre optische Drahtlos-Kommunikationsvorrichtung (AP2) und jede von der einen oder den mehreren weiteren sekundären optischen Drahtlos-Kommunikationsvorrichtungen (STA3) dafür konfiguriert sind, entsprechende weitere Referenz-Taktfrequenzen innerhalb eines weiteren vorbestimmten Referenz-Taktfrequenzbereichs zu erzeugen, die entsprechenden weiteren Referenz-Taktfrequenzen zu verwenden, um das eine oder die mehreren weiteren optischen Drahtlos-Kommunikationssignale zu erzeugen, und die entsprechenden weiteren Referenz-Taktfrequenzen zu verwenden, um die weiteren Daten aus jedem von dem einen oder den mehreren weiteren optischen Drahtlos-Kommunikationssignalen zu extrahieren,
wobei sich mindestens eine von der einen oder den mehreren optischen Wellenlängen von mindestens einer von der einen oder den mehreren weiteren optischen Wellenlängen unterscheidet, und der vorbestimmte Referenz-Taktfrequenzbereich und der weitere vorbestimmte Referenz-Taktfrequenzbereich nicht-überlappend sind.

2. Optisches Drahtlos-Kommunikationssystem (2) nach Anspruch 1,
wobei die primäre optische Drahtlos-Kommunikationsvorrichtung (AP1) dafür konfiguriert ist, eine erste Referenz-Taktfrequenz innerhalb des vorbestimmten Referenz-Taktfrequenzbereichs zu erzeugen, die erste Referenz-Taktfrequenz zu verwenden, um ein erstes optisches Drahtlos-Kommunikationssignal zu erzeugen, das erste Daten einschließt, und das erste optische Drahtlos-Kommunikationssignal an jede von der einen oder den mehreren sekundären optischen Drahtlos-Kommunikationsvorrichtungen (STA1, STA2) auf einer ersten optischen Wellenlänge zu übermitteln,
wobei jede sekundäre optische Drahtlos-Kommunikationsvorrichtung (STA1, STA2) dafür konfiguriert ist, das erste optische Drahtlos-Kommunikationssignal auf der ersten optischen Wellenlänge zu erfassen, eine zweite Referenz-Taktfrequenz innerhalb des vorbestimmten Referenz-Taktfrequenzbereichs zu erzeugen, und die zweite Referenz-Taktfrequenz zu verwenden, um die ersten Daten aus dem erfassten ersten optischen Drahtlos-Kommunikationssignal zu extrahieren,
wobei die weitere primäre optische Drahtlos-Kommunikationsvorrichtung (AP2) dafür konfiguriert ist, eine dritte Referenz-Taktfrequenz innerhalb des weiteren vorbestimmten Referenz-Taktfrequenzbereichs zu erzeugen, die dritte Referenz-Taktfrequenz zu verwenden, um ein drittes optisches Drahtlos-Kommunikationssignal zu erzeugen, das dritte Daten einschließt, und das dritte optische Drahtlos-Kommunikationssignal an jede von der einen oder den mehreren weiteren sekundären optischen Drahtlos-Kommunikationsvorrichtungen (STA3) auf einer dritten optischen Wellenlänge zu übermitteln,
wobei jede weitere sekundäre optische Drahtlos-Kommunikationsvorrichtung (STA3) dafür konfiguriert ist, das dritte optische Drahtlos-Kommunikationssignal auf der dritten optischen Wellenlänge zu erfassen, eine vierte Referenz-Taktfrequenz innerhalb des weiteren vorbestimmten Referenz-Taktfrequenzbereichs zu erzeugen, und die vierte Referenz-Taktfrequenz zu verwenden, um die dritten Daten aus dem erfassten dritten optischen Drahtlos-Kommunikationssignal zu extrahieren, und
wobei die erste und die dritte optische Wellenlänge unterschiedlich sind.

3. Optisches Drahtlos-Kommunikationssystem (2) nach Anspruch 1,
wobei jede sekundäre optische Drahtlos-Kommunikationsvorrichtung (STA1, STA2) dafür konfiguriert ist, eine zweite Referenz-Taktfrequenz innerhalb des vorbestimmten Referenz-Taktfrequenzbereichs zu erzeugen, die zweite Referenz-Taktfrequenz zu verwenden, um ein entsprechendes zweites optisches Drahtlos-Kommunikationssignal zu erzeugen, das entsprechende zweite Daten einschließt, und das entsprechende zweite optische Drahtlos-Kommunikationssignal an die primäre optische Drahtlos-Kommunikationsvorrichtung (AP1) auf einer zweiten optischen Wellenlänge zu übermitteln,
wobei die primäre optische Drahtlos-Kommunikationsvorrichtung (AP1) dafür konfiguriert ist, das zweite optische Drahtlos-Kommunikationssignal auf der zweiten optischen Wellenlänge zu erfassen, eine erste Referenz-Taktfrequenz innerhalb des vorbestimmten Referenz-Taktfrequenzbereichs zu erzeugen, und die erste Referenz-Taktfrequenz zu verwenden, um die zweiten Daten aus dem erfassten zweiten optischen Drahtlos-Kommunikationssignal zu extrahieren,
wobei jede weitere sekundäre optische Drahtlos-Kommunikationsvorrichtung (STA3) dafür konfiguriert ist, eine vierte Referenz-Taktfrequenz innerhalb des weiteren vorbestimmten Referenz-Taktfrequenzbereichs zu erzeugen, die vierte Referenz-Taktfrequenz zu verwenden, um ein entsprechendes viertes optisches Drahtlos-Kommunikationssignal zu erzeugen, das entsprechende vierte Daten einschließt, und das entsprechende vierte optische Drahtlos-Kommunikationssignal an die weitere primäre optische Drahtlos-Kommunikationsvorrichtung (AP1) auf einer vierten optischen Wellenlänge zu übermitteln,
wobei die weitere primäre optische Drahtlos-Kommunikationsvorrichtung (AP1) dafür konfiguriert ist, das vierte optische Drahtlos-Kommunikationssignal auf der vierten optischen Wellenlänge zu erfassen, eine dritte Referenz-Taktfrequenz innerhalb des weiteren vorbestimmten Referenz-Taktfrequenzbereichs zu erzeugen, und die dritte Referenz-Taktfrequenz zu verwenden, um die vierten Daten aus dem erfassten vierten optischen Drahtlos-Kommunikationssignal zu extrahieren, und
wobei die zweite und die vierte optische Wellenlänge unterschiedlich sind.

4. Optisches Drahtlos-Kommunikationssystem (2) nach Anspruch 1,
wobei die primäre optische Drahtlos-Kommunikationsvorrichtung (AP1) dafür konfiguriert ist, eine erste Referenz-Taktfrequenz innerhalb des vorbestimmten Referenz-Taktfrequenzbereichs zu erzeugen, die erste Referenz-Taktfrequenz zu verwenden, um ein erstes optisches Drahtlos-Kommunikationssignal zu erzeugen, das erste Daten einschließt, und das erste optische Drahtlos-Kommunikationssignal an jede von der einen oder den mehreren sekundären optischen Drahtlos-Kommunikationsvorrichtungen (STA1, STA2) auf einer ersten optischen Wellenlänge zu übermitteln,
wobei jede sekundäre optische Drahtlos-Kommunikationsvorrichtung (STA1, STA2) dafür konfiguriert ist, das erste optische Drahtlos-Kommunikationssignal auf der ersten optischen Wellenlänge zu erfassen, eine zweite Referenz-Taktfrequenz innerhalb des vorbestimmten Referenz-Taktfrequenzbereichs zu erzeugen, und die zweite Referenz-Taktfrequenz zu verwenden, um die ersten Daten aus dem erfassten ersten optischen Drahtlos-Kommunikationssignal zu extrahieren,
wobei die weitere primäre optische Drahtlos-Kommunikationsvorrichtung (AP2) dafür konfiguriert ist, eine dritte Referenz-Taktfrequenz innerhalb des weiteren vorbestimmten Referenz-Taktfrequenzbereichs zu erzeugen, die dritte Referenz-Taktfrequenz zu verwenden, um ein drittes optisches Drahtlos-Kommunikationssignal zu erzeugen, das dritte Daten einschließt, und das dritte optische Drahtlos-Kommunikationssignal an jede von der einen oder den mehreren weiteren sekundären optischen Drahtlos-Kommunikationsvorrichtungen (STA3) auf einer dritten optischen Wellenlänge zu übermitteln,
wobei jede weitere sekundäre optische Drahtlos-Kommunikationsvorrichtung (STA3) dafür konfiguriert ist, das dritte optische Drahtlos-Kommunikationssignal auf der dritten optischen Wellenlänge zu erfassen, eine vierte Referenz-Taktfrequenz innerhalb des weiteren vorbestimmten Referenz-Taktfrequenzbereichs zu erzeugen, und die vierte Referenz-Taktfrequenz zu verwenden, um die dritten Daten aus dem erfassten dritten optischen Drahtlos-Kommunikationssignal zu extrahieren,
wobei jede sekundäre optische Drahtlos-Kommunikationsvorrichtung (STA1, STA2) dafür konfiguriert ist, die zweite Referenz-Taktfrequenz zu verwenden, um ein entsprechendes zweites optisches Drahtlos-Kommunikationssignal zu erzeugen, das entsprechende zweite Daten einschließt, und das entsprechende zweite optische Drahtlos-Kommunikationssignal an die primäre optische Drahtlos-Kommunikationsvorrichtung (AP1) auf einer zweiten optischen Wellenlänge zu übermitteln,
wobei die primäre optische Drahtlos-Kommunikationsvorrichtung (AP1) dafür konfiguriert ist, das zweite optische Drahtlos-Kommunikationssignal auf der zweiten optischen Wellenlänge zu erfassen und die erste Referenz-Taktfrequenz zu verwenden, um die zweiten Daten aus dem erfassten zweiten optischen Drahtlos-Kommunikationssignal zu extrahieren,
wobei jede weitere sekundäre optische Drahtlos-Kommunikationsvorrichtung (STA3) dafür konfiguriert ist, die vierte Referenz-Taktfrequenz zu verwenden, um ein entsprechendes viertes optisches Drahtlos-Kommunikationssignal zu erzeugen, das entsprechende vierte Daten einschließt, und das entsprechende vierte optische Drahtlos-Kommunikationssignal an die weitere primäre optische Drahtlos-Kommunikationsvorrichtung (AP2) auf einer vierten optischen Wellenlänge zu übermitteln,
wobei die weitere primäre optische Drahtlos-Kommunikationsvorrichtung (AP2) dafür konfiguriert ist, das vierte optische Drahtlos-Kommunikationssignal auf der vierten optischen Wellenlänge zu erfassen und die dritte Referenz-Taktfrequenz zu verwenden, um die vierten Daten aus dem erfassten vierten optischen Drahtlos-Kommunikationssignal zu extrahieren, und
wobei mindestens eines von Folgendem gilt:
die erste optische Wellenlänge unterscheidet sich von der dritten optischen Wellenlänge, oder
die zweite optische Wellenlänge unterscheidet sich von der vierten optischen Wellenlänge.

5. Optisches Drahtlos-Kommunikationssystem (2) nach Anspruch 1,
wobei jedes optische Drahtlos-Kommunikationssignal einen entsprechenden Kennungscode umfasst, und
wobei jedes weitere optische Drahtlos-Kommunikationssignal einen entsprechenden weiteren Kennungscode umfasst,
wobei sich mindestens einer von dem einen oder den mehreren weiteren Kennungscodes von mindestens einem von dem einen oder den mehreren Kennungscodes unterscheidet.

6. Optisches Drahtlos-Kommunikationssystem (2) nach Anspruch 2,
wobei die primäre optische Drahtlos-Kommunikationsvorrichtung (AP1) dafür konfiguriert ist, die erste Referenz-Taktfrequenz zu verwenden, um das erste optische Drahtlos-Kommunikationssignal mit einem ersten Kennungscode zu erzeugen,
wobei jede sekundäre optische Drahtlos-Kommunikationsvorrichtung (STA1, STA2) dafür konfiguriert ist, die zweite Referenz-Taktfrequenz zu verwenden, um den ersten Kennungscode aus dem erfassten ersten optischen Drahtlos-Kommunikationssignal zu extrahieren und, mindestens zum Teil auf Grundlage dessen, ob der extrahierte erste Kennungscode mit einem Kennungscode übereinstimmt, der in der sekundären optischen Drahtlos-Kommunikationsvorrichtung (STA1, STA2) gespeichert oder für dieselbe verfügbar ist, die ersten Daten aus dem erfassten ersten optischen Drahtlos-Kommunikationssignal zu extrahieren und die extrahierten ersten Daten an das entsprechende Benutzergerät auszugeben,
wobei die weitere primäre optische Drahtlos-Kommunikationsvorrichtung (AP2) dafür konfiguriert ist, die dritte Referenz-Taktfrequenz zu verwenden, um das dritte optische Drahtlos-Kommunikationssignal mit einem dritten Kennungscode zu erzeugen,
wobei jede weitere sekundäre optische Drahtlos-Kommunikationsvorrichtung (STA3) dafür konfiguriert ist, die vierte Referenz-Taktfrequenz zu verwenden, um den dritten Kennungscode aus dem erfassten dritten optischen Drahtlos-Kommunikationssignal zu extrahieren und, mindestens zum Teil auf Grundlage dessen, ob der extrahierte dritte Kennungscode mit einem Kennungscode übereinstimmt, der in der weiteren sekundären optischen Drahtlos-Kommunikationsvorrichtung (STA3) gespeichert oder für dieselbe verfügbar ist, die dritten Daten aus dem erfassten dritten optischen Drahtlos-Kommunikationssignal zu extrahieren und die extrahierten dritten Daten an das entsprechende Benutzergerät auszugeben, und
wobei der erste und der dritte Kennungscode unterschiedlich sind.

7. Optisches Drahtlos-Kommunikationssystem (2) nach Anspruch 3,
wobei jede sekundäre optische Drahtlos-Kommunikationsvorrichtung (STA1, STA2) dafür konfiguriert ist, die zweite Referenz-Taktfrequenz zu verwenden, um das entsprechende zweite optische Drahtlos-Kommunikationssignal mit einem zweiten Kennungscode zu erzeugen,
wobei die primäre optische Drahtlos-Kommunikationsvorrichtung (AP1) dafür konfiguriert ist, die erste Referenz-Taktfrequenz zu verwenden, um den zweiten Kennungscode aus jedem erfassten zweiten optischen Drahtlos-Kommunikationssignal zu extrahieren und, mindestens zum Teil auf Grundlage dessen, ob der extrahierte zweite Kennungscode mit einem Kennungscode übereinstimmt, der in der primären optischen Drahtlos-Kommunikationsvorrichtung (AP1) gespeichert oder für dieselbe verfügbar ist, die zweiten Daten aus dem erfassten zweiten optischen Drahtlos-Kommunikationssignal zu extrahieren und die extrahierten zweiten Daten an das elektronische Netz auszugeben,
wobei jede weitere sekundäre optische Drahtlos-Kommunikationsvorrichtung (STA3) dafür konfiguriert ist, die vierte Referenz-Taktfrequenz zu verwenden, um das entsprechende vierte optische Drahtlos-Kommunikationssignal mit einem vierten Kennungscode zu erzeugen,
wobei die weitere primäre optische Drahtlos-Kommunikationsvorrichtung (AP2) dafür konfiguriert ist, die dritte Referenz-Taktfrequenz zu verwenden, um den vierten Kennungscode aus dem erfassten vierten optischen Drahtlos-Kommunikationssignal zu extrahieren und, mindestens zum Teil auf Grundlage dessen, ob der extrahierte vierte Kennungscode mit einem Kennungscode übereinstimmt, der in der weiteren primären optischen Drahtlos-Kommunikationsvorrichtung (AP2) gespeichert oder für dieselbe verfügbar ist, die vierten Daten aus dem erfassten vierten optischen Drahtlos-Kommunikationssignal zu extrahieren und die extrahierten vierten Daten an das elektronische Netz oder das weitere elektronische Netz auszugeben, und
wobei der zweite und der vierte Kennungscode unterschiedlich sind.

8. Optisches Drahtlos-Kommunikationssystem (2) nach Anspruch 3,
wobei die primäre optische Drahtlos-Kommunikationsvorrichtung (AP1) dafür konfiguriert ist, die erste Referenz-Taktfrequenz zu verwenden, um das erste optische Drahtlos-Kommunikationssignal mit einem ersten Kennungscode zu erzeugen,
wobei jede sekundäre optische Drahtlos-Kommunikationsvorrichtung (STA1, STA2) dafür konfiguriert ist, die zweite Referenz-Taktfrequenz zu verwenden, um den ersten Kennungscode aus dem erfassten ersten optischen Drahtlos-Kommunikationssignal zu extrahieren und, mindestens zum Teil auf Grundlage dessen, ob der extrahierte erste Kennungscode mit einem Kennungscode übereinstimmt, der in der sekundären optischen Drahtlos-Kommunikationsvorrichtung (STA1, STA2) gespeichert oder für dieselbe verfügbar ist, die ersten Daten aus dem erfassten ersten optischen Drahtlos-Kommunikationssignal zu extrahieren und die extrahierten ersten Daten an das entsprechende Benutzergerät auszugeben,
wobei die weitere primäre optische Drahtlos-Kommunikationsvorrichtung (AP2) dafür konfiguriert ist, die dritte Referenz-Taktfrequenz zu verwenden, um das dritte optische Drahtlos-Kommunikationssignal mit einem dritten Kennungscode zu erzeugen,
wobei jede weitere sekundäre optische Drahtlos-Kommunikationsvorrichtung (STA3) dafür konfiguriert ist, die vierte Referenz-Taktfrequenz zu verwenden, um den dritten Kennungscode aus dem erfassten dritten optischen Drahtlos-Kommunikationssignal zu extrahieren und, mindestens zum Teil auf Grundlage dessen, ob der extrahierte dritte Kennungscode mit einem Kennungscode übereinstimmt, der in der weiteren sekundären optischen Drahtlos-Kommunikationsvorrichtung (STA3) gespeichert oder für dieselbe verfügbar ist, die dritten Daten aus dem erfassten dritten optischen Drahtlos-Kommunikationssignal zu extrahieren und die extrahierten dritten Daten an das entsprechende Benutzergerät auszugeben,
wobei jede sekundäre optische Drahtlos-Kommunikationsvorrichtung (STA1, STA2) dafür konfiguriert ist, die zweite Referenz-Taktfrequenz zu verwenden, um das entsprechende zweite optische Drahtlos-Kommunikationssignal mit einem zweiten Kennungscode zu erzeugen,
wobei die primäre optische Drahtlos-Kommunikationsvorrichtung (AP1) dafür konfiguriert ist, die erste Referenz-Taktfrequenz zu verwenden, um den zweiten Kennungscode aus jedem erfassten zweiten optischen Drahtlos-Kommunikationssignal zu extrahieren und, mindestens zum Teil auf Grundlage dessen, ob der extrahierte zweite Kennungscode mit einem Kennungscode übereinstimmt, der in der primären optischen Drahtlos-Kommunikationsvorrichtung (AP1) gespeichert oder für dieselbe verfügbar ist, die zweiten Daten aus dem erfassten zweiten optischen Drahtlos-Kommunikationssignal zu extrahieren und die extrahierten zweiten Daten an das elektronische Netz auszugeben,
wobei jede weitere sekundäre optische Drahtlos-Kommunikationsvorrichtung (STA3) dafür konfiguriert ist, die vierte Referenz-Taktfrequenz zu verwenden, um das entsprechende vierte optische Drahtlos-Kommunikationssignal mit einem vierten Kennungscode zu erzeugen,
wobei die weitere primäre optische Drahtlos-Kommunikationsvorrichtung (AP2) dafür konfiguriert ist, die dritte Referenz-Taktfrequenz zu verwenden, um den vierten Kennungscode aus dem erfassten vierten optischen Drahtlos-Kommunikationssignal zu extrahieren und, mindestens zum Teil auf Grundlage dessen, ob der extrahierte vierte Kennungscode mit einem Kennungscode übereinstimmt, der in der weiteren primären optischen Drahtlos-Kommunikationsvorrichtung (AP2) gespeichert oder für dieselbe verfügbar ist, die vierten Daten aus dem erfassten vierten optischen Drahtlos-Kommunikationssignal zu extrahieren und die extrahierten vierten Daten an das elektronische Netz oder das weitere elektronische Netz auszugeben, und
wobei mindestens eines von Folgendem gilt:
der erste Kennungscode unterscheidet sich von einem oder beiden von dem dritten und dem vierten Kennungscode, oder
der zweite Kennungscode unterscheidet sich von einem oder beiden von dem dritten und dem vierten Kennungscode.

9. Optisches Drahtlos-Kommunikationssystem (2) nach Anspruch 8, wobei die erste und die zweite optische Wellenlänge dieselbe sind und die primäre optische Drahtlos-Kommunikationsvorrichtung (AP1) und jede von den sekundären optischen Drahtlos-Kommunikationsvorrichtungen (STA1, STA2) für eine Halbduplex-Kommunikation zwischen denselben konfiguriert sind oder wobei die erste und die zweite optische Wellenlänge unterschiedlich sind und die primäre optische Drahtlos-Kommunikationsvorrichtung (AP1) und jede von den sekundären optischen Drahtlos-Kommunikationsvorrichtungen (STA1, STA2) für eine Halbduplex- oder eine Vollduplex-Kommunikation zwischen denselben konfiguriert sind.

10. Optisches Drahtlos-Kommunikationssystem (2) nach Anspruch 8 oder 9, wobei der erste und der zweite Kennungscode derselbe sind.

11. Optisches Drahtlos-Kommunikationssystem (2) nach einem der Ansprüche 2, 4, 6 oder 8 bis 10, wobei das erste optische Drahtlos-Kommunikationssignal ein oder mehrere Pakete umfasst, die ersten Daten durch das eine oder die mehreren Pakete befördert werden, und jedes Paket einen Header umfasst, wobei der Header den ersten Kennungscode einschließt.

12. Optisches Drahtlos-Kommunikationssystem (2) nach einem der Ansprüche 3, 4, 7 oder 8 bis 10, wobei das zweite optische Drahtlos-Kommunikationssignal ein oder mehrere Pakete umfasst, die zweiten Daten durch das eine oder die mehreren Pakete befördert werden, und jedes Paket einen Header umfasst, wobei der Header den zweiten Kennungscode einschließt.

13. Optisches Drahtlos-Kommunikationssystem (2) nach einem der Ansprüche 5 bis 12,
wobei jede sekundäre optische Drahtlos-Kommunikationsvorrichtung (STA1, STA2) elektronische Schaltungen umfasst, die dafür konfiguriert sind, einen kryptographischen Schlüssel in Hardware zu speichern oder zu definieren, und wobei die elektronischen Schaltungen jeder sekundären optischen Drahtlos-Kommunikationsvorrichtung (STA1, STA2) dafür konfiguriert sind, zu verhindern, dass Firmware, die einen Kennungscode einschließt, in den elektronischen Schaltungen jeder sekundären optischen Drahtlos-Kommunikationsvorrichtung (STA1, STA2) gespeichert wird, sofern nicht diese Firmware, die einen Kennungscode einschließt, durch den gespeicherten oder definierten kryptographischen Schüssel authentifiziert und/oder entschlüsselt werden kann, und/oder
wobei jeder Kennungscode einen willkürlich erzeugten Code umfasst, jeder Kennungscode in dem Header einer Signalmitteilung, zum Beispiel einer durch IEEE 802.11 unterstützten kurzen Folge oder langen Folge, enthalten ist, oder wobei jeder Kennungscode eine PN-Folge, wie beispielsweise eine Kasami-Folge, eine Gold-Folge, eine Golay-Folge, eine m-Folge, umfasst.

14. Optisches Drahtlos-Kommunikationssystem (2) nach einem der Ansprüche 2 bis 12, wobei die erste und die zweite Referenz-Taktfrequenz ausreichend ähnlich sind, zum Beispiel, weil der vorbestimmte Referenz-Taktfrequenzbereich ausreichend klein ist, dass die ersten und/oder die zweiten Daten unter Verwendung eines Kommunikationsprotokolls, wie beispielsweise IEEE 802.11, zwischen der primären optischen Drahtlos-Kommunikationsvorrichtung (AP1) und jeder sekundären optischen Drahtlos-Kommunikationsvorrichtung (STA1, STA2) kommuniziert werden können.

15. Optisches Drahtlos-Kommunikationsverfahren, das Folgendes umfasst:
Kommunizieren von einem oder mehreren optischen Drahtlos-Kommunikationssignalen zwischen einer primären optischen Drahtlos-Kommunikationsvorrichtung (AP1) eines optischen Drahtlos-Kommunikationsnetzes (10) und einer oder mehreren sekundären optischen Drahtlos-Kommunikationsvorrichtungen (STA1, STA2) des optischen Drahtlos-Kommunikationsnetzes (10) auf einer oder mehreren optischen Wellenlängen, wobei jedes von dem einem oder den mehreren optischen Drahtlos-Kommunikationssignalen Daten einschließt und unter Verwendung einer entsprechenden Referenz-Taktfrequenz erzeugt wird, die innerhalb eines vorbestimmten Referenz-Taktfrequenzbereichs liegt, und
Kommunizieren von einem oder mehreren weiteren optischen Drahtlos-Kommunikationssignalen zwischen einer weiteren primären optischen Drahtlos-Kommunikationsvorrichtung (AP2) eines weiteren optischen Drahtlos-Kommunikationsnetzes (12) und einer oder mehreren weiteren sekundären optischen Drahtlos-Kommunikationsvorrichtungen (STA3) des weiteren optischen Drahtlos-Kommunikationsnetzes (12) auf einer oder mehreren weiteren optischen Wellenlängen, wobei jedes von dem einem oder den mehreren weiteren optischen Drahtlos-Kommunikationssignalen weitere Daten einschließt und unter Verwendung einer entsprechenden weiteren Referenz-Taktfrequenz erzeugt wird, die innerhalb eines weiteren vorbestimmten Referenz-Taktfrequenzbereichs liegt,
wobei die primäre optische Drahtlos-Kommunikationsvorrichtung (AP1) zur Verbindung mit einem elektronischen Netz konfiguriert ist und die weitere primäre optische Drahtlos-Kommunikationsvorrichtung (AP2) zur Verbindung mit dem elektronischen Netz oder einem weiteren elektronischen Netz konfiguriert ist, wobei sich mindestens eine von der einen oder den mehreren optischen Wellenlängen von mindestens einer von der einen oder den mehreren weiteren optischen Wellenlängen unterscheidet, und wobei der vorbestimmte Referenz-Taktfrequenzbereich und der weitere vorbestimmte Referenz-Taktfrequenzbereich nicht überlappend sind, und wahlweise
wobei jedes optische Drahtlos-Kommunikationssignal einen entsprechenden Kennungscode umfasst, jedes weitere optische Drahtlos-Kommunikationssignal einen entsprechenden weiteren Kennungscode umfasst, und sich mindestens einer von dem einen oder den mehreren weiteren Kennungscodes von mindestens einem von dem einen oder den mehreren Kennungscodes unterscheidet.

## Revendications

1. Système de communication optique sans fil (2), comprenant :
un réseau de communication optique sans fil (10) et un réseau de communication optique sans fil additionnel (12) ;
le réseau de communication optique sans fil (10) comprenant :
un appareil de communication optique sans fil primaire (AP1) configuré pour être connecté à un réseau électronique ; et
un ou plusieurs appareils de communication optique sans fil secondaires (STA1, STA2), chaque appareil de communication optique sans fil secondaire (STA1, STA2) étant configuré pour être incorporé dans, ou être connecté à, ou comprenant une partie de, un dispositif utilisateur correspondant ; et
le réseau de communication optique sans fil additionnel (12) comprenant :
un appareil de communication optique sans fil primaire additionnel (AP2) configuré pour être connecté au réseau électronique ou à un réseau électronique additionnel ; et
un ou plusieurs appareils de communication optique sans fil secondaires additionnels (STA3), chaque appareil de communication optique sans fil secondaire additionnel (STA3) étant configuré pour être incorporé dans, ou connecté à, ou comprenant une partie de, un dispositif utilisateur correspondant ;
dans lequel l'appareil de communication optique sans fil primaire (AP1) et chacun des un ou plusieurs appareils de communication optique sans fil secondaires (STA1, STA2) sont configurés pour communiquer un ou plusieurs signaux de communication optique sans fil entre ceux-ci sur une ou plusieurs longueurs d'ondes optiques, dans lequel chacun des un ou plusieurs signaux de communication optique sans fil inclut des données, et dans lequel l'appareil de communication optique sans fil primaire (AP1) et chacun des un ou plusieurs appareils de communication optique sans fil secondaires (STA1, STA2) sont configurés pour générer des fréquences d'horloge de référence correspondantes au sein d'une plage de fréquences d'horloge de référence prédéterminée, utiliser les fréquences d'horloge de référence correspondantes pour générer les un ou plusieurs signaux de communication optique sans fil, et utiliser les fréquences d'horloge de référence correspondantes pour extraire les données de chacun des un ou plusieurs signaux de communication optique sans fil ;
dans lequel l'appareil de communication optique sans fil primaire additionnel (AP2) et chacun des un ou plusieurs appareils de communication optique sans fil secondaires additionnels (STA3) sont configurés pour communiquer un ou plusieurs signaux de communication optique sans fil additionnels entre ceux-ci sur une ou plusieurs longueurs d'ondes optiques additionnelles, dans lequel chacun des un ou plusieurs signaux de communication optique sans fil additionnels inclut des données supplémentaires, et dans lequel l'appareil de communication optique sans fil primaire additionnel (AP2) et chacun des un ou plusieurs appareils de communication optique sans fil secondaires additionnels (STA3) sont configurés pour générer des fréquences d'horloge de référence additionnelles correspondantes au sein d'une plage de fréquences d'horloge de référence additionnelle prédéterminée, utiliser les fréquences d'horloge de référence additionnelles correspondantes pour générer les un ou plusieurs signaux de communication optique sans fil additionnels, et utiliser les fréquences d'horloge de référence additionnelles correspondantes pour extraire les données supplémentaires de chacun des un ou plusieurs signaux de communication optique sans fil additionnels ;
dans lequel au moins une des une ou plusieurs longueurs d'ondes optiques est différente d'au moins une des une ou plusieurs longueurs d'ondes optiques additionnelles, et la plage de fréquences d'horloge de référence prédéterminée et la plage de fréquences d'horloge de référence additionnelle ne se chevauchent pas.

2. Système de communication optique sans fil (2) selon la revendication 1,
dans lequel l'appareil de communication optique sans fil primaire (AP1) est configuré pour générer une première fréquence d'horloge de référence au sein de la plage de fréquences d'horloge de référence prédéterminée, utiliser la première fréquence d'horloge de référence pour générer un premier signal de communication optique sans fil incluant des premières données, et transmettre le premier signal de communication optique sans fil à chacun des un ou plusieurs appareils de communication optique sans fil secondaires (STA1, STA2) sur une première longueur d'ondes optiques ;
dans lequel chaque appareil de communication optique sans fil secondaire (STA1, STA2) est configuré pour détecter le premier signal de communication optique sans fil sur la première longueur d'ondes optiques, générer une deuxième fréquence d'horloge de référence au sein de la plage de fréquences d'horloge de référence prédéterminée, et utiliser la deuxième fréquence d'horloge de référence pour extraire les premières données du premier signal de communication optique sans fil détecté ;
dans lequel l'appareil de communication optique sans fil primaire additionnel (AP2) est configuré pour générer une troisième fréquence d'horloge de référence au sein de la plage de fréquences d'horloge de référence additionnelle prédéterminée, utiliser la troisième fréquence d'horloge de référence pour générer un troisième signal de communication optique sans fil incluant des troisièmes données, et transmettre le troisième signal de communication optique sans fil à chacun des un ou plusieurs appareils de communication optique sans fil secondaires additionnels (STA3) sur une troisième longueur d'ondes optiques ;
dans lequel chaque appareil de communication optique sans fil secondaire additionnel (STA3) est configuré pour détecter le troisième signal de communication optique sans fil sur la troisième longueur d'ondes optiques, générer une quatrième fréquence d'horloge de référence au sein de la plage de fréquences d'horloge de référence additionnelle prédéterminée, et utiliser la quatrième fréquence d'horloge de référence pour extraire les troisièmes données du troisième signal de communication optique sans fil détecté ; et
dans lequel les première et troisième longueurs d'ondes optiques sont différentes.

3. Système de communication optique sans fil (2) selon la revendication 1,
dans lequel chaque appareil de communication optique sans fil secondaire (STA1, STA2) est configuré pour générer une deuxième fréquence d'horloge de référence au sein de la plage de fréquences d'horloge de référence prédéterminée, utiliser la deuxième fréquence d'horloge de référence pour générer un deuxième signal de communication optique sans fil correspondant incluant des deuxièmes données correspondantes, et transmettre le deuxième signal de communication optique sans fil correspondant à l'appareil de communication optique sans fil primaire (AP1) sur une deuxième longueur d'ondes optiques ;
dans lequel l'appareil de communication optique sans fil primaire (AP1) est configuré pour détecter le deuxième signal de communication optique sans fil sur la deuxième longueur d'ondes optiques, générer une première fréquence d'horloge de référence au sein de la plage de fréquences d'horloge de référence prédéterminée, et utiliser la première fréquence d'horloge de référence pour extraire les deuxièmes données du deuxième signal de communication optique sans fil détecté ;
dans lequel chaque appareil de communication optique sans fil additionnel (STA3) est configuré pour générer une quatrième fréquence d'horloge de référence au sein de la plage de fréquences d'horloge de référence additionnelle prédéterminée, utiliser la quatrième fréquence d'horloge de référence pour générer un quatrième signal de communication optique sans fil correspondant incluant des quatrièmes données correspondantes, et transmettre le quatrième signal de communication optique sans fil correspondant à l'appareil de communication optique sans fil primaire additionnel (AP1) sur une quatrième longueur d'ondes optiques ;
dans lequel l'appareil de communication optique sans fil primaire additionnel (AP1) est configuré pour détecter le quatrième signal de communication optique sans fil sur la quatrième longueur d'ondes optiques, générer une troisième fréquence d'horloge de référence au sein de la plage de fréquences d'horloge de référence additionnelle prédéterminée, et utiliser la troisième fréquence d'horloge de référence pour extraire les quatrièmes données du quatrième signal de communication optique sans fil détecté ; et
dans lequel les deuxième et quatrième longueurs d'ondes optiques sont différentes.

4. Système de communication optique sans fil (2) selon la revendication 1,
dans lequel l'appareil de communication optique sans fil primaire (AP1) est configuré pour générer une première fréquence d'horloge de référence au sein de la plage de fréquences d'horloge de référence prédéterminée, utiliser la première fréquence d'horloge de référence pour générer un premier signal de communication optique sans fil incluant des premières données, et transmettre le premier signal de communication optique sans fil à chacun des un ou plusieurs appareils de communication optique sans fil secondaires (STA1, STA2) sur une première longueur d'ondes optiques ;
dans lequel chaque appareil de communication optique sans fil secondaire (STA1, STA2) est configuré pour détecter le premier signal de communication optique sans fil sur la première longueur d'ondes optiques, générer une deuxième fréquence d'horloge de référence au sein de la plage de fréquences d'horloge de référence prédéterminée, et utiliser la deuxième fréquence d'horloge de référence pour extraire les premières données du premier signal de communication optique sans fil détecté ;
dans lequel l'appareil de communication optique sans fil primaire additionnel (AP2) est configuré pour générer une troisième fréquence d'horloge de référence au sein de la plage de fréquences horloge de référence additionnelle prédéterminée, utiliser la troisième fréquence d'horloge de référence pour générer un troisième signal de communication optique sans fil incluant des troisièmes données, et transmettre le troisième signal de communication optique sans fil à chacun des un ou plusieurs appareils de communication optique sans fil secondaires additionnels (STA3) sur une troisième longueur d'ondes optiques ;
dans lequel chaque appareil de communication optique sans fil secondaire additionnel (STA3) est configuré pour détecter le troisième signal de communication optique sans fil sur la troisième longueur d'ondes optiques, générer une quatrième fréquence d'horloge de référence au sein de la plage de fréquences d'horloge de référence additionnelle prédéterminée, et utiliser la quatrième fréquence d'horloge de référence pour extraire les troisièmes données du troisième signal de communication optique sans fil détecté ;
dans lequel chaque appareil de communication optique sans fil secondaire (STA1, STA2) est configuré pour utiliser la deuxième fréquence d'horloge de référence pour générer un deuxième signal de communication optique sans fil correspondant incluant des deuxièmes données correspondantes, et transmettre le deuxième signal de communication optique sans fil correspondant à l'appareil de communication optique sans fil primaire (AP1) sur une deuxième longueur d'ondes optiques ;
dans lequel l'appareil de communication optique sans fil primaire (AP1) est configuré pour détecter le deuxième signal de communication optique sans fil sur la deuxième longueur d'ondes optiques et utiliser la première fréquence d'horloge de référence pour extraire les deuxièmes données du deuxième signal de communication optique sans fil détecté ;
dans lequel chaque appareil de communication optique sans fil secondaire additionnel (STA3) est configuré pour utiliser la quatrième fréquence d'horloge de référence pour générer un quatrième signal de communication optique sans fil correspondant incluant des quatrièmes données correspondantes, et transmettre le quatrième signal de communication optique sans fil correspondant à l'appareil de communication optique sans fil primaire additionnel (AP2) sur une quatrième longueur d'ondes optiques ;
dans lequel l'appareil de communication optique sans fil primaire additionnel (AP2) est configuré pour détecter le quatrième signal de communication optique sans fil sur la quatrième longueur d'ondes optiques et utiliser la troisième fréquence d'horloge de référence pour extraire les quatrièmes données du quatrième signal de communication optique sans fil détecté ; et
dans lequel au moins un des suivants s'applique :
la première longueur d'ondes optiques est différente de la troisième longueur d'ondes optiques ; ou
la deuxième longueur d'ondes optiques est différente de la quatrième longueur d'ondes optiques.

5. Système de communication optique sans fil (2) selon la revendication 1,
dans lequel chaque signal de communication optique sans fil comprend un code d'identification correspondant ; et
dans lequel chaque signal de communication optique sans fil additionnel comprend un code d'identification additionnel correspondant ;
dans lequel au moins un des un ou plusieurs codes d'identification additionnels est différent d'au moins un des un ou plusieurs codes d'identification.

6. Système de communication optique sans fil (2) selon la revendication 2,
dans lequel l'appareil de communication optique sans fil primaire (AP1) est configuré pour utiliser la première fréquence d'horloge de référence pour générer le premier signal de communication optique sans fil avec un premier code d'identification ;
dans lequel chaque appareil de communication optique sans fil secondaire (STA1, STA2) est configuré pour utiliser la deuxième fréquence d'horloge de référence pour extraire le premier code d'identification du premier signal de communication optique sans fil détecté et, sur la base, au moins en partie, de si le premier code d'identification extrait coïncide ou ne coïncide pas avec un code d'identification stocké dans, ou disponible pour, l'appareil de communication optique sans fil secondaire (STA1, STA2), extraire les premières données du premier signal de communication optique sans fil détecté et émettre en sortie les premières données extraites vers le dispositif utilisateur correspondant ;
dans lequel l'appareil de communication optique sans fil primaire additionnel (AP2) est configuré pour utiliser la troisième fréquence d'horloge de référence pour générer le troisième signal de communication optique sans fil avec un troisième code d'identification ;
dans lequel chaque appareil de communication optique sans fil secondaire additionnel (STA3) est configuré pour utiliser la quatrième fréquence d'horloge de référence pour extraire le troisième code d'identification du troisième signal de communication optique sans fil détecté, et, sur la base, au moins en partie, de si le troisième code d'identification extrait coïncide ou ne coïncide pas avec un code d'identification stocké dans, ou disponible pour, l'appareil de communication optique sans fil secondaire additionnel (STA3), extraire les troisièmes données du troisième signal de communication optique sans fil détecté et émettre en sortie les troisièmes données extraites au dispositif utilisateur correspondant ; et
dans lequel les premier et troisième codes d'identification sont différents.

7. Système de communication optique sans fil (2) selon la revendication 3,
dans lequel chaque appareil de communication optique sans fil secondaire (STA1, STA2) est configuré pour utiliser la deuxième fréquence d'horloge de référence pour générer le deuxième signal de communication optique sans fil correspondant avec un deuxième code d'identification ;
dans lequel l'appareil de communication optique sans fil primaire (AP1) est configuré pour utiliser la première fréquence d'horloge de référence pour extraire le deuxième code d'identification de chaque deuxième signal de communication optique sans fil détecté, et, sur la base, au moins en partie, de si le deuxième code d'identification extrait coïncide ou ne coïncide pas avec un code d'identification stocké dans, ou disponible pour, l'appareil de communication optique sans fil primaire (AP1), extraire les deuxièmes données du deuxième signal de communication optique sans fil détecté et émettre en sortie les deuxièmes données extraites au réseau électronique ;
dans lequel chaque appareil de communication optique sans fil secondaire additionnel (STA3) est configuré pour utiliser la quatrième fréquence d'horloge de référence pour générer le quatrième signal de communication optique sans fil correspondant avec un quatrième code d'identification ;
dans lequel l'appareil de communication optique sans fil primaire additionnel (AP2) est configuré pour utiliser la troisième fréquence d'horloge de référence pour extraire le quatrième code d'identification du quatrième signal de communication optique sans fil détecté et, sur la base, au moins en partie, de si le quatrième code d'identification extrait coïncide ou ne coïncide pas avec un code d'identification stocké dans, ou disponible pour, l'appareil de communication optique sans fil primaire additionnel (AP2), extraire les quatrièmes données du quatrième signal de communication optique sans fil détecté et émettre en sortie les quatrièmes données extraites au réseau électronique ou au réseau électronique additionnel ; et
dans lequel les deuxième et quatrième codes d'identification sont différents.

8. Système de communication optique sans fil (2) selon la revendication 3,
dans lequel l'appareil de communication optique sans fil primaire (AP1) est configuré pour utiliser la première fréquence d'horloge de référence pour générer le premier signal de communication optique sans fil avec un premier code d'identification ;
dans lequel chaque appareil de communication optique sans fil secondaire (STA1, STA2) est configuré pour utiliser la deuxième fréquence d'horloge de référence pour extraire le premier code d'identification du premier signal de communication optique sans fil détecté et, sur la base, au moins en partie, de si le premier code d'identification extrait coïncide ou ne coïncide pas avec un code d'identification stocké, dans, ou disponible pour, l'appareil de communication optique sans fil secondaire (STA1, STA2), extraire les premières données du premier signal de communication optique sans fil détecté et émettre en sortie les premières données extraites au dispositif utilisateur correspondant ;
dans lequel l'appareil de communication optique sans fil primaire additionnel (AP2) est configuré pour utiliser la troisième fréquence d'horloge de référence pour générer le troisième signal de communication optique sans fil avec un troisième code d'identification ;
dans lequel chaque appareil de communication optique sans fil secondaire additionnel (STA3) est configuré pour utiliser la quatrième fréquence d'horloge de référence pour extraire le troisième code d'identification du troisième signal de communication optique sans fil détecté et, sur la base, au moins en partie, de si le troisième code d'identification extrait coïncide ou ne coïncide pas avec un code d'identification stocké dans, ou disponible pour, l'appareil de communication optique sans fil secondaire additionnel (STA3), extraire les troisièmes données du troisième signal de communication optique sans fil détecté et émettre en sortie les troisièmes données extraites au dispositif utilisateur correspondant ;
dans lequel chaque appareil de communication optique sans fil secondaire (STA1, STA2) est configuré pour utiliser la deuxième fréquence d'horloge de référence pour générer le deuxième signal de communication optique sans fil correspondant avec un deuxième code d'identification,
dans lequel l'appareil de communication optique sans fil primaire (AP1) est configuré pour utiliser la première fréquence d'horloge de référence pour extraire le deuxième code d'identification de chaque deuxième signal de communication optique sans fil détecté et, sur la base, au moins en partie, de si le deuxième code d'identification extrait coïncide ou ne coïncide pas avec un code d'identification stocké dans, ou disponible pour, l'appareil de communication optique sans fil primaire (AP1), extraire les deuxièmes données du deuxième signal de communication optique sans fil détecté et émettre en sortie les deuxièmes données extraites au réseau électronique ;
dans lequel chaque appareil de communication optique sans fil secondaire additionnel (STA3) est configuré pour utiliser la quatrième fréquence d'horloge de référence pour générer le quatrième signal de communication optique sans fil correspondant avec un quatrième code d'identification ;
dans lequel l'appareil de communication optique sans fil primaire additionnel (AP2) est configuré pour utiliser la troisième fréquence d'horloge de référence pour extraire le quatrième code d'identification du quatrième signal de communication optique sans fil détecté et, sur la base, au moins en partie, de si le quatrième code d'identification extrait coïncide ou ne coïncide pas avec un code d'identification stocké dans, ou disponible pour, l'appareil de communication optique sans fil primaire additionnel (AP2), extraire les quatrièmes données du quatrième signal de communication optique sans fil détecté et émettre en sortie les quatrièmes données extraites au réseau électronique ou au réseau électronique additionnel ; et
dans lequel au moins un des suivants s'applique :
le premier code d'identification est différent de l'un ou des deux des troisième et quatrième codes d'identification ; ou
le deuxième code d'identification est différent de l'un ou des deux des troisième et quatrième codes d'identification.

9. Système de communication optique sans fil (2) selon la revendication 8, dans lequel les première et deuxième longueurs d'ondes optiques sont identiques et l'appareil de communication optique sans fil primaire (AP1) et chacun des appareils de communication optique sans fil secondaires (STA1, STA2) sont configurés pour une communication semi-duplex entre ceux-ci ou dans lequel les première et deuxième longueurs d'ondes optiques sont différentes et l'appareil de communication optique sans fil primaire (AP1) et chacun des appareils de communication optique sans fil secondaires (STA1, STA2) sont configurés pour une communication semi-duplex ou en duplex intégral entre ceux-ci.

10. Système de communication optique sans fil (2) selon la revendication 8 ou 9, dans lequel les premier et deuxième codes d'identification sont identiques.

11. Système de communication optique sans fil (2) selon l'une quelconque des revendications 2, 4, 6 ou 8 à 10, dans lequel le premier signal de communication optique sans fil comprend un ou plusieurs paquets, les premières données sont transportées par les un ou plusieurs paquets, et chaque paquet comprend un en-tête, dans lequel l'en-tête inclut le premier code d'identification.

12. Système de communication optique sans fil (2) selon l'une quelconque des revendications 3, 4, 7 ou 8 à 10, dans lequel le deuxième signal de communication optique sans fil comprend un ou plusieurs paquets, les deuxièmes données sont transportées par les un ou plusieurs paquets, et chaque paquet comprend un en-tête, dans lequel l'en-tête inclut le deuxième code d'identification.

13. Système de communication optique sans fil (2) selon l'une quelconque des revendications 5 à 12,
dans lequel chaque appareil de communication optique sans fil secondaire (STA1, STA2) comprend des circuits électroniques qui sont configurés pour stocker ou définir une clé cryptographique dans un matériel, et dans lequel les circuits électroniques de chaque appareil de communication optique sans fil secondaire (STA1, STA2) sont configurés pour empêcher le stockage d'un micrologiciel, incluant un code d'identification, dans les circuit électroniques de chaque appareil de communication optique sans fil secondaire (STA1, STA2), à moins que ce micrologiciel, incluant un code d'identification, ne puisse être authentifié et/ou décrypté par la clé cryptographique stockée ou définie ; et/ou
dans lequel chaque code d'identification comprend un code généré arbitrairement, chaque code d'identification est contenu dans l'en-tête d'un message de signal, par exemple une séquence courte ou une séquence longue supportée par IEEE 802.11, ou dans lequel chaque code d'identification comprend une séquence PN, tel qu'une séquence Kasami, une séquence Gold, une séquence Golay, une séquence m.

14. Système de communication optique sans fil (2) selon l'une quelconque des revendications 2 à 12, dans lequel les première et deuxième fréquences d'horloge de référence sont suffisamment similaires, par exemple parce que la plage de fréquences d'horloge de référence prédéterminée est suffisamment réduite, que les premières et/ou deuxièmes données peuvent être communiquées entre l'appareil de communication optique sans fil primaire (AP1) et chaque appareil de communication optique sans fil secondaire (STA1, STA2) en utilisant un protocole de communication, par exemple IEEE 802.11.

15. Procédé de communication optique sans fil, comprenant :
la communication d'un ou de plusieurs signaux de communication optique sans fil entre un appareil de communication optique sans fil primaire (AP1) d'un réseau de communication optique sans fil (10) et un ou plusieurs appareils de communication optique sans fil secondaires (STA1, STA2) du réseau de communication optique sans fil (10) sur une ou plusieurs longueurs d'ondes optiques, dans lequel chacun des un ou plusieurs signaux de communication optique sans fil inclut des données et est généré en utilisant une fréquence d'horloge de référence correspondante située au sein d'une plage de fréquences d'horloge de référence prédéterminée ; et
la communication d'un ou de plusieurs signaux de communication optique sans fil entre un appareil de communication optique sans fil primaire additionnel (AP2) d'un réseau de communication optique sans fil additionnel (12) et un ou plusieurs appareils de communication optique sans fil secondaires additionnels (STA3) du réseau de communication optique sans fil additionnel (12) sur une ou plusieurs longueurs d'ondes optiques additionnelles, dans lequel chacun des un ou plusieurs signaux de communication optique sans fil additionnels inclut des données additionnelles et est généré en utilisant une fréquence d'horloge de référence additionnelle correspondante située au sein d'une plage de fréquences d'horloge de référence additionnelle prédéterminée ;
dans lequel l'appareil de communication optique sans fil primaire (AP1) est configuré pour être connecté à un réseau électronique et l'appareil de communication optique sans fil primaire additionnel (AP2) est configuré pour être connecté au réseau électronique ou à un réseau électronique additionnel, dans lequel au moins une des une ou plusieurs longueurs d'ondes optiques est différente d'au moins une des une ou plusieurs longueurs d'ondes optiques additionnelles, et dans lequel la plage de fréquences d'horloge de référence prédéterminée et la plage de fréquences d'horloge de référence additionnelle prédéterminée ne se chevauchent pas ; et, optionnellement
dans lequel chaque signal de communication optique sans fil comprend un code d'identification correspondant, chaque signal de communication optique sans fil additionnel comprend un code d'identification correspondant additionnel, et au moins un des un ou plusieurs codes d'identification additionnels est différent d'au moins un des un ou plusieurs codes d'identification.
